(19) Europäisches Patentamt
European Patent Office
Office européen des brevets

(11) EP 4 538 670 A1

(12) **EUROPEAN PATENT APPLICATION**
published in accordance with Art. 153(4) EPC

(43) Date of publication:
**16.04.2025 Bulletin 2025/16**

(21) Application number: **23831600.4**

(22) Date of filing: **29.06.2023**

(51) International Patent Classification (IPC):
***G01M 13/021*** *(2019.01)*

(52) Cooperative Patent Classification (CPC):
**G01M 13/021;** Y02T 90/00

(86) International application number:
**PCT/JP2023/024256**

(87) International publication number:
**WO 2024/005161 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 PCT/JP2022/026348**

(71) Applicants:
- **Polyplastics Co., Ltd.**
  **Tokyo 108-8280 (JP)**
- **BAUHAR ALJAZ POGACNIK S.P.**
  **4260 Bled (SI)**

(72) Inventors:
- **MATSUMURA Takuma**
  **Fuji-shi, Shizuoka 416-8533 (JP)**
- **MIOKI Kohshi**
  **Fuji-shi, Shizuoka 416-8533 (JP)**
- **KADA Masahiro**
  **Fuji-shi, Shizuoka 416-8533 (JP)**
- **POGACNIK Aljaz**
  **4260 Bled (SI)**

(74) Representative: **Maiwald GmbH**
**Elisenhof**
**Elisenstraße 3**
**80335 München (DE)**

(54) **METHOD FOR CALCULATING ACTUAL CONTACT RATIO OF THERMOPLASTIC RESIN GEAR, METHOD FOR DERIVING COEFFICIENT OF FRICTION OF THERMOPLASTIC RESIN GEAR, METHOD FOR PREDICTING TOOTH ROOT TEMPERATURE OF THERMOPLASTIC RESIN GEAR, AND METHOD FOR PREDICTING SERVICE LIFE OF THERMOPLASTIC RESIN GEAR**

(57) A method for calculating an actual contact ratio of thermoplastic resin gears, including: a step 1 of measuring a temperature distribution of a pair of gears; a step 2 of calculating a temperature distribution of a structural analysis model A identical in geometry to the pair of gears by CAE structural analysis; a step 3 of preparing data on temperature dependency of an elastic modulus a of thermoplastic resin; a step 4 of performing in any order a step 4a of correcting the elastic modulus a in accordance with a strain rate dependency and a step 4b of correcting the elastic modulus a in accordance with an actual amount of deformation of the gears; step 5 of using a corrected elastic modulus a' to calculate a contact stress distribution by the CAE structural analysis; a step 6 of calculating an angular difference between a meshing start point and a meshing end point of the pair of gears based on the contact stress distribution; and a step 7 of calculating the actual contact ratio of the pair of gears from the angular difference.

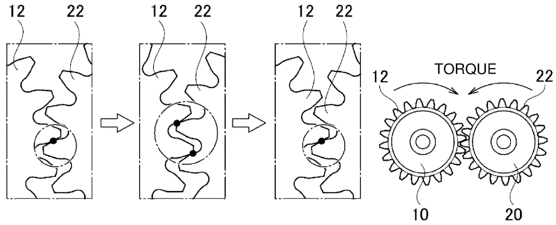

FIG. 1A FIG. 1B FIG. 1C FIG. 1D

EP 4 538 670 A1

## Description

### Technical Field

The present invention relates to a method for calculating an actual contact ratio of thermoplastic resin gears, a method for deriving a coefficient of friction of a thermoplastic resin gear, a method for predicting tooth root temperature of a thermoplastic resin gear, and a method for predicting fatigue life of a thermoplastic resin gear.

### Background Art

Gears made of thermoplastic resins such as polyamide resin or polyacetal resin are lightweight and have high vibration absorption properties and self- lubricity. Accordingly, the thermoplastic resin gears are used instead of metal gears in a wide range of fields since they can be used without lubrication and can also be produced easily by injection molding ,etc. As the application of the resin gears expands, requirements, such as miniaturization, noise reduction, high heat resistance and long-term durability (fatigue failure life) for use at high speeds, are becoming more demanding (see Patent Literature 1).

In Europe, the gear fatigue characteristics of resin gears (VDI 2736 Blatt 2) are estimated using tooth root temperature that is calculated based on gear geometries and operating conditions ,etc. The calculation of the tooth root temperature, which is required for the estimation, is significantly influenced by the coefficient of friction of the resin gears. As a method for measuring the coefficient of friction used in the calculation of tooth root temperature of the resin gears, a pin-on-disk method, a ring-on-ring method, and a ball-on-disk method are typically used. However, since the form of sliding between resin parts in these methods greatly differs from the form of sliding of actual gears, there is a problem that the coefficient of friction in these methods does not match the coefficient of friction of the actual gears. In addition, in a formula for calculating the tooth root temperature, a contact ratio also has a significant influence. However, in the formula for calculating the tooth root temperature, the contact ratio (actual contact ratio), in consideration of increase in tooth root temperature and deformation of the tooth of the resin gears, was not taken into consideration. As a result, the accuracy of the tooth root temperature predicted based on the coefficient of friction measured by the conventional methods and on the contact ratio without consideration of the deformation of the tooth was low, and consequently, the gear fatigue characteristics of the resin gears could not be evaluated with high accuracy.

### Citation List

### Patent Literature

Patent Literature 1: Japanese Patent Laid-Open No. 2017-62017

### Summary of Invention

### Technical Problem

The present invention has been made in view of the conventional issues described above, and an object of the present invention is to provide a method for calculating a contact ratio (actual contact ratio) in consideration of tooth temperature and tooth deformation in thermoplastic resin gears, a method for deriving a coefficient of friction of a thermoplastic resin gear with enhanced accuracy, a method for predicting tooth root temperature of a thermoplastic resin gear with high accuracy, and a method for predicting fatigue life of a thermoplastic resin gear with high accuracy.

### Solution to Problem

One aspect of the present invention to accomplish the above object is as follows.

(1) A method for calculating an actual contact ratio of a pair of gears including at least one thermoplastic resin gear, including:

a step 1 of rotating the pair of gears including at least one thermoplastic resin gear at a prescribed rotational speed while the gears are meshed with each other, and measuring a temperature distribution of the pair of gears;
a step 2 of creating a structural analysis model A having geometry identical to the pair of gears using CAE, and inputting temperatures acquired from the temperature distribution of the pair of gears measured in the step 1 into the structural analysis model A to calculate a temperature distribution of the structural analysis model A by CAE structural analysis;
a step 3 of preparing data on temperature dependency of an elastic modulus a of thermoplastic resin that constitutes the pair of gears;
a step 4 of performing a step 4a and a step 4b in any order, the step 4a including using the CAE structural analysis to calculate, based on the temperature distribution of the structural analysis model A calculated in the step 2 and the data on temperature dependency of the elastic modulus a prepared in the step 3, a location where a maximum tensile strain is generated in a tooth root strain distribution of meshing teeth when the pair of gears are meshed, and correcting the elastic modulus a or an elastic modulus obtained in the step 4b below in accordance with a strain rate dependency of the elastic modulus of the gears in the structural analysis model A that is calculated from the location where the maximum tensile strain is generated in the strain distribution, and the step 4b including measuring an actual amount of deformation of the pair of gears, calculating an amount of deformation by the CAE structural analysis using a CAE structural analysis model B created so as to reflect the actual amount of deformation and having a same geometry as the pair of gears, and then obtaining a ratio X between the actual amount of deformation and the amount of deformation by the CAE structural analysis to correct the elastic modulus a or the elastic modulus obtained in the step 4a in accordance with the ratio X;
a step 5 of using a corrected elastic modulus a' obtained in the step 4 to calculate a contact stress distribution when a prescribed torque is applied to a driving gear in the pair of gears by the CAE structural analysis;
a step 6 of calculating an angular difference between a meshing start point and a meshing end point of a tooth of the pair of gears based on the contact stress distribution calculated in the step 5; and
a step 7 of dividing the angular difference calculated in the step 6 by an angle corresponding to a circular pitch of the pair of gears (360°/number of teeth) to calculate the actual contact ratio of the pair of gears.

(2) A method for deriving a coefficient of friction of a thermoplastic resin gear, including a step 8 of measuring a transmission efficiency η of torque transmitted from a driving gear to a driven gear of a pair of gears, in which the coefficient of friction of the thermoplastic resin gear is derived using a transmission loss formula for a gear based on an actual contact ratio calculated by the method for calculating an actual contact ratio of thermoplastic resin gears according to the above (1) and the transmission efficiency η of the torque measured in the step 8.
(3) The method for deriving a coefficient of friction of a thermoplastic resin gear according to the above (2), in which the coefficient of friction of the thermoplastic resin gear is derived by substituting the actual contact ratio into any one of following expressions 1 to 3 depending on a value of the actual contact ratio.

[Expression 1]

$$1 < \varepsilon_\alpha < 2 \qquad \eta = 1 - \frac{\mu \cdot \pi \cdot (u+1)}{z_2 \cdot \cos\beta_b} \cdot (1 - \varepsilon_1 - \varepsilon_2 + \varepsilon_1^2 + \varepsilon_2^2) \quad \cdots \text{Expression 1}$$

$$2 < \varepsilon_\alpha < 3 \qquad \eta = 1 - \frac{\mu \cdot \pi \cdot (u+1)}{z_2 \cdot \cos\beta_b} \cdot \left(\frac{3 - \varepsilon_1 - \varepsilon_2 + \varepsilon_1^2 + \varepsilon_2^2}{3}\right) \quad \cdots \text{Expression 2}$$

$$3 < \varepsilon_\alpha < 4 \qquad \eta = 1 - \frac{\mu \cdot \pi \cdot (u+1)}{z_2 \cdot \cos\beta_b} \cdot \left(\frac{6 - 2\varepsilon_1 - 2\varepsilon_2 + \varepsilon_1^2 + \varepsilon_2^2}{3}\right) \quad \cdots \text{Expression 3}$$

where $\varepsilon_\alpha$ is a transverse contact ratio, η is transmission efficiency of torque, μ is the coefficient of friction of the thermoplastic resin gear, u is a gear ratio $z_2/z_1$, $\beta_b$ is a base helix angle, $z_1$ is the number of teeth of a gear having fewer teeth in the pair of gears, $z_2$ is the number of teeth of a gear having more teeth in the pair of gears, $\varepsilon_1$ is an approach contact ratio, and $\varepsilon_2$ is a recess contact ratio.
(4) A method for predicting a tooth root temperature of a thermoplastic resin gear, including predicting a tooth root temperature of a thermoplastic resin gear by substituting an actual contact ratio calculated by the method for calculating an actual contact ratio of thermoplastic resin gears according to the above (1) and a coefficient of friction μ derived by any derivation method (except for the method for deriving a coefficient of friction of a thermoplastic resin gear according to the above (2)) into any one of a following expression 4 and following expressions 5 to 7.
[Expression 2]

$$\theta_{\mathrm{Fu}\beta} \approx \theta_0 + P \cdot \mu \cdot H_{\mathrm{v}} \cdot \left( \frac{k_{\theta,\mathrm{Fu}\beta}}{b \cdot m_{\mathrm{n}} \cdot z \cdot v_{\mathrm{t}}^{c} \cdot m_{\mathrm{n}}^{-0.25}} + \frac{R_{\lambda,\mathrm{G}}}{A_{\mathrm{G}}} \right) \cdot ED^{0.64} \quad \cdots \text{Expression 4}$$

where $\theta_{Fu\beta}$ is the tooth root temperature (°C), $\theta_0$ is ambient temperature (°C), P is nominal output ($2\pi$ x rotational speed x torque) (W), $\mu$ is the coefficient of friction of the thermoplastic resin gear, $k_{\theta,Fu\beta}$ is a heat storage factor that is a heat transfer coefficient ($K \cdot (m/s)^c \cdot mm^{1.75}/W$) defined by VDI 2736 Blatt 2 for a pair of gears including at least one thermoplastic resin gear, b is a tooth width (mm), $m_n$ is a normal module (mm), z is a total number of teeth of the pair of gears (unless all the teeth on the entire circumference are meshed, only the number of teeth within a meshing range is counted), $v_t^c$ is a term of a heat dissipation factor, vt is a pitch circumference speed (m/s), c is a constant of 0.05 to 0.70, $R_{\lambda,G}$ is a housing thermal resistance ($K \cdot m^2/W$), $A_G$ is a housing heat dissipation area ($m^2$), ED is relative meshing time per 10 minutes, and $H_v$ is a loss coefficient obtained by following expressions 5 to 7 depending on a value of the actual contact ratio.

[Expression 3]

$$1 < \varepsilon_\alpha < 2 \quad H_{\mathrm{v}} = \frac{\pi \cdot (u+1)}{z_2 \cdot \cos\beta_{\mathrm{b}}} \cdot (1 - \varepsilon_1 - \varepsilon_2 + \varepsilon_1^2 + \varepsilon_2^2) \quad \cdots \text{Expression 5}$$

$$2 < \varepsilon_\alpha < 3 \quad H_{\mathrm{v}} = \frac{\pi \cdot (u+1)}{z_2 \cdot \cos\beta_{\mathrm{b}}} \cdot \left( \frac{3 - \varepsilon_1 - \varepsilon_2 + \varepsilon_1^2 + \varepsilon_2^2}{3} \right) \quad \cdots \text{Expression 6}$$

$$3 < \varepsilon_\alpha < 4 \quad H_{\mathrm{v}} = \frac{\pi \cdot (u+1)}{z_2 \cdot \cos\beta_{\mathrm{b}}} \cdot \left( \frac{6 - 2\varepsilon_1 - 2\varepsilon_2 + \varepsilon_1^2 + \varepsilon_2^2}{3} \right) \quad \cdots \text{Expression 7}$$

where $\varepsilon_\alpha$ is a transverse contact ratio, u is a gear ratio $z_2/z_1$, $\beta_b$ is a base helix angle, $z_1$ is the number of teeth of a gear having fewer teeth in the pair of gears, $z_2$ is the number of teeth of a gear having more teeth in the pair of gears, $\varepsilon_1$ is an approach contact ratio, and $\varepsilon_2$ is a recess contact ratio.

(5) A method for predicting a tooth root temperature of a thermoplastic resin gear, including predicting the tooth root temperature of the thermoplastic resin gear by substituting a contact ratio without consideration of deformation and a coefficient of friction $\mu$ derived by the method for deriving a coefficient of friction of a thermoplastic resin gear according to the above (2) into following expressions 4 and 5 to 7:

[Expression 4]

$$\theta_{\mathrm{Fu}\beta} \approx \theta_0 + P \cdot \mu \cdot H_{\mathrm{v}} \cdot \left( \frac{k_{\theta,\mathrm{Fu}\beta}}{b \cdot m_{\mathrm{n}} \cdot z \cdot v_{\mathrm{t}}^{c} \cdot m_{\mathrm{n}}^{-0.25}} + \frac{R_{\lambda,\mathrm{G}}}{A_{\mathrm{G}}} \right) \cdot ED^{0.64} \quad \cdots \text{Expression 4}$$

where $\theta_{Fu\beta}$ is the tooth root temperature (°C), $\theta_0$ is ambient temperature (°C), P is nominal output ($2\pi$ x rotational speed x torque) (W), $\mu$ is the coefficient of friction of the thermoplastic resin gear, ke, $_{Fu\beta}$ is a heat storage factor that is a heat transfer coefficient ($K \cdot (m/s)^c \cdot mm^{1.75}/W$) defined by VDI 2736 Blatt 2 for a pair of gears including at least one thermoplastic resin gear, b is a tooth width (mm), $m_n$ is a normal module (mm), z is a total number of teeth of the pair of gears (unless all the teeth on the entire circumference are meshed, only the number of teeth within a meshing range is counted), $v_t^c$ is a term of a heat dissipation factor, vt is a pitch circumference speed (m/s), c is a constant of 0.05 to 0.70, $R_{\lambda,G}$ is a housing thermal resistance ($K \cdot m^2/W$), $A_G$ is a housing heat dissipation area ($m^2$), ED is relative meshing time per 10 minutes, and $H_v$ is a loss coefficient obtained by following expressions 5 to 7 depending on a value of the actual contact ratio.

[Expression 5]

$$1 < \varepsilon_\alpha < 2 \quad H_v = \frac{\pi \cdot (u+1)}{z_2 \cdot \cos\beta_b} \cdot (1 - \varepsilon_1 - \varepsilon_2 + \varepsilon_1^2 + \varepsilon_2^2) \quad \cdots \text{Expression 5}$$

$$2 < \varepsilon_\alpha < 3 \quad H_v = \frac{\pi \cdot (u+1)}{z_2 \cdot \cos\beta_b} \cdot \left(\frac{3 - \varepsilon_1 - \varepsilon_2 + \varepsilon_1^2 + \varepsilon_2^2}{3}\right) \quad \cdots \text{Expression 6}$$

$$3 < \varepsilon_\alpha < 4 \quad H_v = \frac{\pi \cdot (u+1)}{z_2 \cdot \cos\beta_b} \cdot \left(\frac{6 - 2\varepsilon_1 - 2\varepsilon_2 + \varepsilon_1^2 + \varepsilon_2^2}{3}\right) \quad \cdots \text{Expression 7}$$

where $\varepsilon_\alpha$ is a transverse contact ratio, u is a gear ratio $z_2/z1$, $\beta_b$ is a base helix angle, $z_1$ is the number of teeth of a gear having fewer teeth in the pair of gears, $z_2$ is the number of teeth of a gear having more teeth in the pair of gears, $\varepsilon_1$ is an approach contact ratio, and $\varepsilon_2$ is a recess contact ratio.

(6) A method for predicting a tooth root temperature of a thermoplastic resin gear, including predicting the tooth root temperature of the thermoplastic resin gear by substituting an actual contact ratio calculated by the method for calculating an actual contact ratio of thermoplastic resin gears according to the above (1) and a coefficient of friction $\mu$ derived by the method for deriving a coefficient of friction of a thermoplastic resin gear according to the above (2) into following expressions 4 and 5 to 7.

[Expression 6]

$$\theta_{\mathrm{Fu}\beta} \approx \theta_0 + P \cdot \mu \cdot H_v \cdot \left(\frac{k_{\theta,\mathrm{Fu}\beta}}{b \cdot m_n \cdot z \cdot v_t^c \cdot m_n^{-0.25}} + \frac{R_{\lambda,G}}{A_G}\right) \cdot ED^{0.64} \quad \cdots \text{Expression 4}$$

where $\theta_{\mathrm{Fu}\beta}$ is the tooth root temperature (°C), $\theta_0$ is ambient temperature (°C), P is nominal output ($2\pi$ x rotational speed x torque) (W), $\mu$ is the coefficient of friction of the thermoplastic resin gear, ke, $_{\mathrm{Fu}}\beta$ is a heat storage factor that is a heat transfer coefficient ($K \cdot (m/s)^c \cdot mm^{1.75}/W$) defined by VDI 2736 Blatt 2 for a pair of gears including at least one thermoplastic resin gear, b is a tooth width (mm), $m_n$ is a normal module (mm), z is a total number of teeth of the pair of gears (unless all the teeth on the entire circumference are meshed, only the number of teeth within a meshing range is counted), $v_t^c$ is a term of a heat dissipation factor, vt is a pitch circumference speed (m/s), c is a constant of 0.05 to 0.70, $R_{\lambda,G}$ is a housing thermal resistance ($K \cdot m^2/W$), $A_G$ is a housing heat dissipation area ($m^2$), ED is relative meshing time per 10 minutes, and $H_v$ is a loss coefficient obtained by following expressions 5 to 7 depending on a value of the actual contact ratio.

[Expression 7]

$$1 < \varepsilon_\alpha < 2 \quad H_v = \frac{\pi \cdot (u+1)}{z_2 \cdot \cos\beta_b} \cdot (1 - \varepsilon_1 - \varepsilon_2 + \varepsilon_1^2 + \varepsilon_2^2) \quad \cdot\cdot\cdot \text{Expression 5}$$

$$2 < \varepsilon_\alpha < 3 \quad H_v = \frac{\pi \cdot (u+1)}{z_2 \cdot \cos\beta_b} \cdot \left(\frac{3 - \varepsilon_1 - \varepsilon_2 + \varepsilon_1^2 + \varepsilon_2^2}{3}\right) \quad \cdot\cdot\cdot \text{Expression 6}$$

$$3 < \varepsilon_\alpha < 4 \quad H_v = \frac{\pi \cdot (u+1)}{z_2 \cdot \cos\beta_b} \cdot \left(\frac{6 - 2\varepsilon_1 - 2\varepsilon_2 + \varepsilon_1^2 + \varepsilon_2^2}{3}\right) \quad \cdot\cdot\cdot \text{Expression 7}$$

where $\varepsilon_\alpha$ is a transverse contact ratio, u is a gear ratio $z_2$/z1, $\beta_b$ is a base helix angle, $z_1$ is the number of teeth of a gear having fewer teeth in the pair of gears, $z_2$ is the number of teeth of a gear having more teeth in the pair of gears, $\varepsilon_1$ is an approach contact ratio, and $\varepsilon_2$ is a recess contact ratio.

(7) The method for predicting a tooth root temperature of a thermoplastic resin gear according to any one of the above (4) to (6), in which when the pair of gears is a combination of thermoplastic resin gears, at least one of followings is executed: setting the number of teeth z in the expression 4 to a total number of teeth of the pair of gears (counting only the number of teeth within a meshing range unless all the teeth on the entire circumference are meshed); setting c in the expression 4 to 0.10 to 0.60; and setting $k\theta,_{Fu}\beta$ in the expression 4 to (A·ln(b) + B) to (A·ln(b) + C) (where b is a tooth width (mm), A is 1130 to 3610, B is -1.782A + 3286, and C is - 1.728A + 5291).

(8) The method for predicting a tooth root temperature of a thermoplastic resin gear according to any one of claims 4 to 6, in which when the pair of gears is a combination of the thermoplastic resin gear and a metal gear, at least one of followings is executed: setting the number of teeth z in the expression 4 to a total number of teeth of the pair of gears (counting only the number of teeth within a meshing range unless all the teeth on the entire circumference are meshed); setting c in the expression 4 to 0.10 to 0.60; and setting $k\theta,_{Fu}\beta$ in the expression 4 to (A·ln(b) + B) to (A·ln(b) + C) (where b is a tooth width (mm), A is 100 to 2000, B is -2.284A + 1424, and C is - 2.316A + 3637).

(9) A method for predicting fatigue life of a thermoplastic resin gear, including a step 9 of preparing an S-N curve of the thermoplastic resin gear for each tooth temperature of the thermoplastic resin gear, in which the fatigue life of the thermoplastic resin gear is predicted based on the S-N curve corresponding to a tooth root temperature obtained by the method for predicting a tooth root temperature of a thermoplastic resin gear according to any one of the above (4) to (8).

Advantageous Effects of Invention

The present invention can provide a method for calculating a contact ratio (actual contact ratio) in consideration of tooth temperature and tooth deformation in thermoplastic resin gears, a method for deriving a coefficient of friction of the thermoplastic resin gear with enhanced accuracy, a method for predicting tooth root temperature of the thermoplastic resin gear with high accuracy, and a method for predicting fatigue life of the thermoplastic resin gear with high accuracy.

Brief Description of Drawing

[Figure 1] Figure 1 includes diagrams showing a pair of gears in a meshed state to describe a contact ratio.

[Figure 2] Figure 2 is a graph showing the relationship of a distance in tooth width direction of a gear with a temperature distribution.

[Figure 3] Figure 3 is a top view showing a CAE analysis model A for resin gears.

[Figure 4] Figure 4 is a diagram showing a tooth root strain distribution in CAE analysis.

[Figure 5] Figure 5 is a graph showing the relationship of the tooth root strain relative to step No. of the gear in the CAE analysis.

[Figure 6] Figure 6 is a graph showing the relationship of the elastic modulus relative to the strain rate of a tensile test specimen.

[Figure 7] Figure 7 includes (A) a top view and (B) a front view of a device for measuring the amount of deformation of gear teeth.

[Figure 8] Figure 8 is a graph showing the relationship of the rotation angle of a rotary side gear relative to a gear load (torque) (measured values and CAE analysis values).

[Figure 9] Figure 9 is a graph showing a ratio of the measured values to the CAE analysis values with respect to the relationship of the rotation angle of the rotary side gear relative to the gear load (torque).

[Figure 10] Figure 10 is a graph showing the rotation angle of the rotary side gear relative to the gear load (torque) at a corrected elastic modulus .

[Figure 11] Figure 11 a graph showing the relationship of the contact ratio relative to a maximum temperature of tooth.

[Figure 12] Figure 12 is a graph showing the relationship of a coefficient of friction relative to a maximum temperature of the teeth in gear pairs 1 to 8 (without grease).

[Figure 13] Figure 13 is a graph showing the relationship of the coefficient of friction relative to the maximum temperature of the teeth in gear pairs 1', 3', 5' and 6' (with grease).

[Figure 14] Figure 14 is a graph showing the relationship of measured temperature relative to predicted temperature in the gear pairs 1 to 7 (without grease) by the method for predicting a tooth root temperature in the present embodiment.

[Figure 15] Figure 15 is a graph showing the relationship of the measured temperature relative to the predicted temperature in the gear pairs 1', 3', 5' and 6' (with grease) by the method for predicting a tooth root temperature in the present embodiment.

[Figure 16] Figure 16 is a graph showing the relationship of the measured temperature relative to the predicted temperature in the gear pairs 8 to 11 (without grease) by the method for predicting a tooth root temperature in the present embodiment.

[Figure 17] Figure 17 is a graph showing the relationship of the measured temperature relative to the predicted temperature by the method for predicting a tooth root temperature in the present embodiment.

[Figure 18] Figure 18 is a graph showing the relationship of the measured temperature relative to the predicted temperature by the method for predicting a tooth root temperature in the present embodiment.

[Figure 19] Figure 19 is a graph showing the relationship of the measured temperature relative to the predicted temperature by the method for predicting a tooth root temperature in the present embodiment.

[Figure 20] Figure 20 is a graph showing the relationship of the measured temperature relative to the predicted temperature by the method for predicting a tooth root temperature in the present embodiment.

[Figure 21] Figure 21 is a graph showing the relationship of the measured temperature relative to the predicted temperature by the method for predicting a tooth root temperature in the present embodiment.

[Figure 22] Figure 22 includes (a) a sectional view and (b) a side view of a resin gear having 54 teeth used for various evaluations.

[Figure 23] Figure 23 includes (a) a sectional view and (b) a side view of a resin gear having 23 teeth used for various evaluations.

[Figure 24] Figure 24 includes (a) a sectional view and (b) a side view of a resin gear having 14 teeth used for various evaluations.

[Figure 25] Figure 25 is a side view of a metal gear having 18 teeth used for various evaluations.

[Figure 26] Figure 26 is a side view of a metal gear having 14 teeth used for various evaluations.

[Figure 27] Figure 27 is a sectional view of a metal gear having 35 teeth used for various evaluations.

[Figure 28] Figure 28 is a sectional view of a metal gear having 54 teeth used for various evaluations.

## Description of Embodiments

### <Method For Calculating Actual Contact Ratio of Thermoplastic Resin Gears>

The method for calculating an actual contact ratio of thermoplastic resin gears (hereinafter simply referred to as "resin gears") in the present embodiment is a method for calculating the actual contact ratio of a pair of gears including at least one thermoplastic resin gear. The method includes following steps 1 to 7.

Step 1: rotating the pair of gears including at least one thermoplastic resin gear at a prescribed rotational speed while the gears are meshed with each other, and measuring a temperature distribution of the pair of gears.

Step 2: creating a structural analysis model A having a geometry identical to the pair of gears using CAE, and inputting temperatures acquired from the temperature distribution of the pair of gears measured in the step 1 into the structural analysis model A to calculate a temperature distribution of the structural analysis model A by CAE structural analysis.

Step 3: preparing data on temperature dependency of an elastic modulus a of thermoplastic resin that constitutes the pair of gears.

Step 4: performing a step 4a and a step 4b in any order, the step 4a including using the CAE structural analysis to calculate, based on the temperature distribution of the structural analysis model A calculated in the step 2 and the data on temperature dependency of the elastic modulus a prepared in the step 3, a location where a maximum tensile strain is generated in a tooth root strain distribution of meshing teeth when the pair of gears are meshed, and correcting the elastic modulus a or an elastic modulus obtained in the step 4b below in accordance with a strain rate dependency of the elastic modulus of the gears in the structural analysis model A that is calculated from the location where the maximum tensile strain is generated in the strain distribution, and the step 4b including measuring an actual amount of deformation of the pair of gears, calculating an amount of deformation by the CAE structural analysis using a CAE structural analysis model B created so as to reflect the actual amount of deformation and having a geometry identical to the pair of gears, and then obtaining a ratio X between the actual amount of deformation and the amount of deformation by the CAE structural analysis to correct the elastic modulus a or the elastic modulus obtained in the step 4a in accordance with the ratio X.

Step 5: using a corrected elastic modulus a' obtained in the step 4 to calculate a contact stress distribution when a prescribed torque is applied to a driving gear in the pair of gears by the CAE structural analysis.

Step 6: calculate an angular difference between a meshing start point and a meshing end point of the pair of gears based on the contact stress distribution calculated in the step 5.

Step 7: dividing the angular difference calculated in the step 6 by an angle corresponding to a circular pitch (360°/number of teeth) to calculate the actual contact ratio of the pair of gears.

First, the "actual contact ratio" will be described with reference to Figure 1. Figure 1 show the state where a tooth 12 of a gear 10 meshes with a tooth 22 of a gear 20 (see Figure 1 (D)), in which Figures 1(A) to 1(C) show an enlarged portion of the teeth of each gear in the meshed state. In Figures 1(A) to 1(C), a point of contact between the teeth of the respective gear is indicated by a black dot. The teeth of each gear are in contact with each other at one location in Figure 1(A), two locations in 1(B), and one location in 1(C). In this way, when a pair of gears is rotating in a meshed state, the number of teeth that come into contact varies depending on the angle of rotation. The "actual contact ratio" is a value obtained by dividing an angle, corresponding to the length of path of contact while a pair of the thermoplastic resin gears is rotating in the state of meshing with each other, by an angle corresponding to the circular pitch of the pair of gears (360°/number of teeth). Unlike metal gears, the thermoplastic resin gears have large deformation and their meshing teeth deflection, and so the contact ratio of the thermoplastic resin gears cannot be considered in the same way as the metal gears. In the case of gears made of metal, deformation is small because the elastic modulus is extremely high and the change with temperature is small, and therefore the contact ratio is substantially unchanged even when the deformation is taken into consideration. On the other hand, in the case of resin gears, the elastic modulus is low and the elastic modulus fluctuates greatly depending on the temperature, and so the contact ratio also varies depending on the operating conditions (tooth temperature and load). Therefore, in the present embodiment related to the resin gears, an "actual contact ratio" in consideration of the deflection of teeth peculiar to thermoplastic resins is calculated instead of using the contact ratio without consideration of deformation.

Hereinafter, the steps 1 to 7 of calculating the actual contact ratio will be described. In the following description, the results of various evaluations, performed using measuring instruments and the like described below, are shown.

- Measurement of measured temperature distribution: Thermovision CPA-7800 Thermography made by CHINO CORPORATION
- Structural analysis software: ADVENTURECluster2020 made by Allied Engineering Corporation
- Measurement of actual amount of deformation: strength tester (Tensilon UTA-50KN)
- Measurement of torque transmission efficiency: small gear fatigue tester (made by Ono SOKKI Co., Ltd.)
- Molded gear geometry

    Molded gear geometry with 54 teeth (see Figure 22)
    Molded gear geometry with 23 teeth (see Figure 23)
    Molded gear geometry with 14 teeth (see Figure 24)
    Metal gear with 18 teeth (see Figure 25)
    Metal gear with 14 teeth (see Figure 26)
    Metal gears with 35 teeth (see Figure 27)
    Metal gears with 54 teeth (see Figure 28)

Note that values in Figures 22 to 28 indicate dimensions (mm) of each element. A metal gear 30 shown in Figures 25 and 26 has a geometry joined to a gear 34 of a shaft 32.

[Step 1]

The step 1 includes rotating a pair of gears including at least one thermoplastic resin gear at a prescribed rotational speed while the gears are meshed with each other, and measuring a temperature distribution of the pair of gears. In short, the temperature distribution is measured while a pair of gears is rotated. The temperature distribution can be measured by a non-contact thermometer, such as a radiation thermometer, a thermography, and an infrared camera, for example. The prescribed rotational speed can be set to any number. For example, in the case of predicting the tooth root temperature of a gear as will be described later, the prescribed rotational speed may be the rotational speed of the gear that is set when the tooth root temperature is predicted. The temperature distribution of the gear can be measured in a tooth width direction and in a rim. Gear fixture, used for attaching the gear to a small gear fatigue tester, may be made of metal or resin, though the resin is preferable as it does not take heat from a tooth surface.

A pair of gears may include at least one thermoplastic resin gear, or both the gears may be thermoplastic resin gears, or one gear may be the thermoplastic resin gear while the other may be a metal gear. When both the gears are the thermoplastic resin gears, the respective thermoplastic resins may be the same resin type or different. In addition, the thermoplastic resin in one or both the thermoplastic resin gears may be filled with fibrous or other inorganic fillers. Moreover, the gears in a pair of gears may be identical in geometry or may be different in the number of teeth and/or in tooth width.

[Step 2]

The step 2 includes creating a structural analysis model A having a geometry identical to the pair of gears using computer aided engineering (CAE), and inputting the temperatures acquired from the temperature distribution of the pair of gears measured in the step 1 into the structural analysis model A to calculate a temperature distribution of the structural analysis model A by CAE structural analysis.

Here, it may be considered to perform CAE structural analysis to calculate the actual contact ratio using an elastic modulus obtained from the measured temperature distribution by a thermography. However, the thermography have such issues that only the temperature distribution on the surface of a molded product and that a long time is needed to acquire the measured temperature distribution. Accordingly, in the step **2,** the temperature distribution by the CAE structural analysis (the measured temperature distribution is reflected on the CAE) is used.

In the step 2, temperature conditions such as a central tooth width temperature and a rim average temperature based on the temperature distribution measured in the step 1 are input into a CAE structural analysis software to perform heat transfer analysis so as to calculate the temperature distribution by the CAE analysis. Figure 2 shows a measured temperature distribution (black circles) and a temperature distribution by the CAE heat transfer analysis (white circles). As a mesh model for the CAE structural analysis, the structural analysis model A shown in Figure 3 can be used, for example.

[Step 3]

The step 3 includes preparing data on temperature dependency of an elastic modulus a of thermoplastic resin that constitutes the pair of gears.

Specifically, in the step 3, the data on the elastic modulus a relative to temperature is prepared for the thermoplastic resin that constitutes the pair of gears. The data may be acquired by measurement, or existing data such as published data by manufacturers may be used.

Note that the step 3 may be executed before the start of the step 4, and may be performed before the start of the step 1 or the step 2.

[Step 4]

The step 4 includes a step 4a, the step 4a including using the CAE structural analysis to calculate, based on the temperature distribution of the structural analysis model A calculated in the step 2 and the data on temperature dependency of the elastic modulus a prepared in the step 3, a location where a maximum tensile strain is generated in a tooth root strain distribution of meshing teeth when the pair of gears are meshed, and correcting the elastic modulus a or an elastic modulus obtained in a step 4b below in accordance with a strain rate dependency of the elastic modulus of the gears in the structural analysis model A that is calculated from the location where the maximum tensile strain is generated in the strain distribution. The step 4 also includes a step 4b, the step 4b including measuring an actual amount of deformation of the pair of gears, calculating an amount of deformation by the CAE structural analysis using a CAE structural analysis model B created so as to reflect the actual amount of deformation and having a geometry identical to the pair of gears, and then obtaining a ratio X between the actual amount of deformation and the amount of deformation by the CAE structural analysis to correct the elastic modulus a or the elastic modulus obtained in the step 4a in accordance with the ratio X. The step 4a and the step 4b are performed in any order. In other words, the step 4a may be executed first or the step 4b may be executed first. Hereinafter, description is given of the step 4a and the step 4b.

(Step 4a)

The step 4a is simply put a step of correcting the elastic modulus a prepared in the step 3 (or an elastic modulus obtained by correcting the elastic modulus a in the step 4b) in consideration of a strain rate dependency calculated from the strain distribution.

Figure 4 shows the strain distribution calculated by the CAE structural analysis. Figure 4 shows the strain distribution when the gear 10 on the driving side and the gear 20 on the driven side are rotated at a rotational speed of 100 rpm and a torque of 9 N·m. Here, specifications such as dimensions of the gear 10 on the driving side and the gear 20 on the driven side are shown below.

Gear geometry (driving side): spur gear (module: 1.0 mm, the number of teeth: 54, tooth width: 10 mm, pressure angle: 20°, and profile shift coefficient : 0)
Gear geometry (driven side): spur gear (module: 1.0 mm, the number of teeth: 54, tooth width: 10 mm, pressure angle: 20°, profile shift coefficient: 0)

In Figure 4, a largest strain is within a circle 24, i.e., at the location where a maximum tensile strain is generated in the tooth root strain distribution of the teeth of the driven gear 20 that is in contact with the teeth of the driving gear 10.

The strain rate dependency refers to change in properties in accordance with the strain rate when a load is applied to a material. As the strain rate (e.g., a tensile rate) increases in a resin material, the strength and elastic modulus of the material tend to increase. Therefore, in calculations for resin gears, the strain rate dependency of the elastic modulus caused by the difference in operating conditions (rotational speed) needs to be taken into consideration.

First, a temperature dependency of the elastic modulus of each part of the gear is calculated based on the temperature distribution of the structural analysis model A calculated in the step 2. By analyzing deformation through the CAE analysis using the calculated data on the temperature dependency of the elastic modulus , the strain rate, at the location where the maximum tensile strain is generated in the tooth root strain distribution of the meshed teeth when the resin gears are actually meshed, is calculated. Then, the strain rate of the elastic modulus is calculated as shown below, for example. In a following example, a driving gear and a driven gear having following geometries are used at the rotational speed: 100 rpm and the torque: 9·N.m.

Gear geometry (driving side): spur gear (module: 1.0 mm, the number of teeth: 54, tooth width: 10 mm, pressure angle: 20°, and profile shift coefficient : 0)
Gear geometry (driven side): spur gear (module: 1.0 mm, the number of teeth: 54, tooth width: 10 mm, pressure angle: 20°, profile shift coefficient: 0)

a) define CAE analysis time per time step (s/step) and angular speed (rad/s) in the CAE analysis (for example, 0.02 s/step and 0.175 rad/s).
b) convert the defined data to the rotation angle of the gear per CAE analysis step (° /step).
c) multiply the rotation angle of the gear per CAE analysis step obtained in b) by the number of steps from the start to the peak of the strain to calculate the rotation angle (°).
d) calculate the time (s) required to rotate for the rotation angle calculated in c) (for example, 0.008 s). This is the number of steps (CAE) converted into time (s).
e) strain rate (/s) = strain/ time required for analysis (s) = (0.02 (time point where the strain is maximum) - 0.005 (strain start time point))/ 0.008 s = 1.86 (/s).

In other words, when the time point where the strain is maximum and the time taken to reach that time point are calculated from the point where the strain is generated and the strain rate of the elastic modulus is calculated, the result of calculation is 1.86 (/s).

Figure 5 is a graph showing the relationship of the tooth root strain relative to step No. in the CAE analysis. While a horizontal axis in Figure 5 represents the step No., the strain rate is expressed as an inclination of the graph (straight line) surrounded with a single-dotted line in Figure 5 by converting the step No. into time.

Next, the elastic modulus of the resin gear for CAE analysis is corrected to match a measured value (elastic modulus obtained by a tensile test using ISO tensile test specimens). The measured value of the elastic modulus is shown in the graph in Figure 6.

According to Figure 6, the elastic modulus at a strain rate of 1.86 *(/s)* is about 2800 MPa. A ratio of 2800 MPa to 1940 MPa that is the value of a reference elastic modulus (reference conditions: tensile speed of 1 (mm/s), strain rate of 0.01 (/s)) is 2800/1940 = 1.45. Therefore, the elastic modulus , in consideration of the strain rate dependency of the resin gear by the CAE analysis, is obtained by multiplying the reference elastic modulus by 1.45. In other words, it becomes possible to correct the elastic modulus in accordance with the strain rate of the elastic modulus caused by the difference in rotation speed.

Although it is desirable to use the data on the temperature dependency of the elastic modulus corresponding to an actual gear condition (strain rate), the strain rate dependency of the elastic modulus may be measured in advance, then the elastic modulus corresponding to an actual strain rate of the gear may be calculated, and the elastic modulus at each temperature may be calculated in accordance with the temperature dependency of the elastic modulus acquired in advance.

(Step 4b)

The step 4b is simply put a step of correcting the elastic modulus a prepared in the step 3 (or an elastic modulus obtained by correcting the elastic modulus a in the step 4a) in consideration of an actual amount of deformation.

First, an example of measuring an actual amount of deformation of gears is shown. Figures 7 show an example of a tester used for measuring the actual amount of deformation of gears. In a tester 30 shown in Figure 7, the gear 10 and the gear 20 are meshed with each other, and the gear 10 is set to rotate around a shaft 32, while the gear 20 is fixed to restrain rotation. The shaft 32 is equipped with a load adding lever 34 behind the gear 10, and pressing the load adding lever 34 downward rocks the gear 10 clockwise in Figure 7. At this time, since the gear 10 meshes with the fixed gear 20, its rotation is restricted and the teeth of the gear 10 and the gear 20 are slightly displaced. In the tester 30 shown in Figure 7, pressing the load adding lever 34 downward makes it possible to apply load (torque) to the gear 10 and to thereby attain the relationship between the amount of displacement of the load adding lever 34 in accordance with the deformation of the teeth and the torque. Specifically, the amount of displacement of the load adding lever 34 with respect to optional torque can be converted to an axial rotation angle. In other words, the rotation angle of the gear is indirectly calculated from the amount of deformation of the teeth.

Here, the instruments and conditions for measuring the actual amount of deformation of the gear are shown below, though they are merely examples and the present embodiment is not limited those shown below.

Tester: universal tester UTA-50KN-RTC manufactured by A&D Company., Ltd.
Gear materials: Duracon (registered trademark) POM M90-44 (unfilled material) made by POLYPLASTICS CO., LTD.
Gear geometry (rotary side): spur gear (module: 1.0 mm, the number of teeth: 54, tooth width: 10 mm, pressure angle: 20°, profile shift coefficient : 0)
Gear geometry (fixed side): spur gear (module: 1.0 mm, the number of teeth: 54, tooth width: 10 mm, pressure angle: 20°, profile shift coefficient : 0)
Torque: 1, 3, 5, 7, 9 N·m (allowable stress (MPa) depending on the material can be set as an upper limit)
Test speed at force point: set as appropriate in consideration of strain rate dependency and stress relaxation. For example, a speed of 5mm/min.
Horizontal distance to force point: 65 mm
Lubrication: oil lubricated (industrial gear oil with viscosity of ISO VG 100 made by TRUSCO NAKAYAMA CORPORATION)
*having the function of suppressing the instability in load transfer due to stick-slip phenomenon (grease or other lubricants can also be used)
Ambient temperature: 23°C
Radial backlash $j_r$: 0.2 mm

Next, a CAE analysis model B reflecting the gear geometry of a measurement test is created by CAE. Then, deformation analysis is performed to calculate an axial rotation angle from the amount of displacement of the teeth. In the deformation analysis using CAE, the axial rotation angle is calculated from the amount of displacement of the tooth that is not influenced by the deformation due to application of the load (torque).

Figures 8 and 9 show the results of comparing the measured values and CAE analysis values of the rotation angle of the gear. Figure 8 shows the relationship of the rotation angle of the gear relative to the gear load (torque), with measured values (white graphs) and CAE analysis values (hatched graphs). Figure 9 also shows the ratio of the measured values to the CAE analysis values with respect to the relationship of the rotation angle of the gear relative to the gear load (torque). Since the CAE analysis values are lower than the measured values for any load (torque), it becomes possible to match the CAE analysis values with the measured amount of deformation in appearance, by correcting the elastic modulus calculated by the CAE analysis to be smaller.

Table 1 below shows the corrected elastic modulus obtained by dividing an uncorrected elastic modulus (2500 MPa) at 23°C for each torque by a "measured/CAE ratio". For example, in the case of the torque of 9 N·m, the "measured/CAE ratio" is 1.51, and so the elastic modulus corrected for a measured-CAE deviation = uncorrected elastic modulus (2500 MPa) x 1/1.51 = uncorrected elastic modulus (2500 MPa) x 0.66 =$1.7 \times 10^3$ MPa.

Figure 10 shows the comparison between the CAE analysis and measured results with respect to the relationship of the rotational angle relative to the torque, using the corrected elastic modulus . In Figure 10, white circles indicate CAE analysis values, and black circles indicate measured values.

[Table 1]

| | Torque | | | | |
|---|---|---|---|---|---|
| | 1 N·m | 3 N·m | 5 N·m | 7 N·m | 9 N·m |
| Measured/CAE ratio | 1.92 | 1.76 | 1.65 | 1.58 | 1.51 |
| Corrected elastic modulus (MPa) | 1302 | 1423 | 1513 | 1587 | 1651 |

According to Figure 10, since the measured values and the CAE calculated values of the rotation angle are generally identical, the elastic modulus corrected as described above is appropriate.
Table 2 below shows an example of the case where the elastic modulus is corrected by the step 4a and the step 4b described above.

[Table 2]

| Temperature (°C) | Elastic Modulus a(MPa) |
|---|---|
| 23 | 2500 |
| 80 | 1060 |
| 120 | 550 |

Step 4a →

| Temperature (°C) | Elastic Modulus (MPa) |
|---|---|
| 23 | 3630 |
| 80 | 1540 |
| 120 | 800 |

Step 4b →

| Temperature (°C) | Elastic Modulus a'(MPa) |
|---|---|
| 23 | 2400 |
| 80 | 1020 |
| 120 | 530 |

The elastic modulus obtained by correcting the elastic modulus a in the steps 4a and 4b is the elastic modulus a' (right-most table) used in the step 5.
As described in the foregoing, the elastic modulus for CAE analysis can be corrected to be the elastic modulus corresponding to actual measurement by correcting the elastic modulus in the steps 4a and 4b.
As described above, the steps 4a and 4b are performed in any order, and the step 4a may be performed first or the step 4b may be performed first.

[Step 5]

The step 5 is the step of using a corrected elastic modulus a' obtained in the step 4 to calculate a contact stress distribution when a prescribed torque is applied to a driving gear in the pair of gears by the CAE structural analysis.
By inputting the corrected elastic modulus a' calculated in the step 4 and the measurement condition (torque) into the CAE structural analysis software to perform a deformation analysis (contact analysis), a contact stress distribution when the prescribed torque is applied to the driving gear is calculated. A mesh model for CAE structural analysis, similar to the structural analysis model A shown in Figure 3, can be used.

[Step 6]

The step 6 is the step of calculating an angular difference between a meshing start point and a meshing end point of the pair of gears based on the contact stress distribution calculated in the step 5.
From the contact stress distribution calculated in step 5, the "angular difference from the meshing start point to the meshing end point" ($\theta_{end}$ - $\theta_{start}$) is calculated when focused on a certain tooth.

[Step 7]

The step 7 is the step of dividing the angular difference calculated in the step 6 by an angle corresponding to a circular pitch (360°/number of teeth) to calculate the actual contact ratio of the pair of gears.
By dividing the angular difference ($\theta_{end}$ - $\theta_{start}$) from the meshing start point to the meshing end point calculated in step 6 by $\theta_{pitch}$ (angle corresponding to the circular pitch (360°/number of teeth)), an actual contact ratio of the resin gears according to the measurement condition is calculated (contact ratio = ($\theta_{end}$ - $\theta_{start}$) /θpitch).
As described in the foregoing, the method for calculating an actual contact ratio of thermoplastic resin gears in the present embodiment can calculate the actual contact ratio in consideration of tooth temperature and tooth deformation. The calculated actual contact ratio can be applied to the method for deriving a coefficient of friction of a thermoplastic resin gear of the present embodiment shown below, and the method for predicting a tooth root temperature of a thermoplastic resin gear of the present embodiment and the method for predicting fatigue life of a thermoplastic resin gear as described later. However, the actual contact ratio is not limited thereto.

<Method for Deriving Coefficient of Friction of Thermoplastic Resin Gear>

The method for deriving a coefficient of friction of a thermoplastic resin gear of the present embodiment includes a step 8 of measuring a transmission efficiency $\eta$ of torque transmitted from a drive gear to a driven gear of a pair of gears, and deriving the coefficient of friction of the thermoplastic resin gear using a transmission loss formula for a gear based on an actual contact ratio calculated by the method for calculating an actual contact ratio of thermoplastic resin gears according to the present embodiment described before and the transmission efficiency $\eta$ of the torque measured in the step 8.

In the method for deriving a coefficient of friction of a thermoplastic resin gear of the present embodiment, the coefficient of friction is derived from the actual contact ratio calculate by the method for calculating an actual contact ratio of thermoplastic resin gears of the present embodiment described before and a measured value of the transmission efficiency $\eta$ of the torque transmitted from the drive gear to the driven gear of the pair of gears. Specifically, in the present embodiment, since the coefficient of friction is derived in consideration of the actual contact ratio of a pair of gears, the coefficient of friction according to the mode of sliding between actual gears is derived. Therefore, the prediction accuracy of the tooth root temperature, which will be described later, is enhanced, unlike the case of using the coefficient of friction derived by the pin-on-disk method, the ring-on-ring method, or the ball-on-disk method.

The step 8 includes measuring transmission efficiency of torque transmitted from a drive gear to a driven gear of a pair of gears. The torque transmission efficiency can be calculated by measuring the torque of a driven gear and the torque of a driving gear, and using a formula of torque of driven gear x (the number of teeth of driving gear/ the number of teeth of the driven gear)/torque of driving gear. For example, when a torque value of the driving gear is 2.47, a torque value of the driven gear is 2.37, the number of teeth of the driving gear is 54, and the number of teeth of the driven gear is 54, the transmission efficiency $\eta$ = 2.37 x (54/54)/2.47 = 0.96.

Next, the coefficient of friction of the thermoplastic resin gear is derived using a transmission loss formula for gears, based on the actual contact ratio calculated by the method for calculating an actual contact ratio of thermoplastic resin gears according to the present embodiment described above and the transmission efficiency $\eta$ of the torque calculated in the step 8. Examples of the transmission loss formula for gears may include Niemann's formula, Buckingham's formula, and Merritt's formula. Hereinafter, the Niemann's formula is described.

The coefficient of friction $\mu$ of the thermoplastic resin gear is derived by substituting the actual contact ratio into any one of following expressions 1 to 3 depending on the value of the actual contact ratio calculated by the method for calculating an actual contact ratio of thermoplastic resin gears of the present embodiment described above.

[Expression 8]

$$1 < \varepsilon_\alpha < 2 \qquad \eta = 1 - \frac{\mu \cdot \pi \cdot (u+1)}{z_2 \cdot \cos\beta_b} \cdot (1 - \varepsilon_1 - \varepsilon_2 + \varepsilon_1^2 + \varepsilon_2^2) \quad \cdots \text{Expression 1}$$

$$2 < \varepsilon_\alpha < 3 \qquad \eta = 1 - \frac{\mu \cdot \pi \cdot (u+1)}{z_2 \cdot \cos\beta_b} \cdot \left(\frac{3 - \varepsilon_1 - \varepsilon_2 + \varepsilon_1^2 + \varepsilon_2^2}{3}\right) \quad \cdots \text{Expression 2}$$

$$3 < \varepsilon_\alpha < 4 \qquad \eta = 1 - \frac{\mu \cdot \pi \cdot (u+1)}{z_2 \cdot \cos\beta_b} \cdot \left(\frac{6 - 2\varepsilon_1 - 2\varepsilon_2 + \varepsilon_1^2 + \varepsilon_2^2}{3}\right) \quad \cdots \text{Expression 3}$$

where $\varepsilon_\alpha$ is a transverse contact ratio, $\eta$ is transmission efficiency of torque, $\mu$ is the coefficient of friction of the thermoplastic resin gear, u is a gear ratio $z_2/z_1$, $\beta_b$ is a base helix angle, $z_1$ is the number of teeth of a gear having fewer teeth in the pair of gears, $z_2$ is the number of teeth of a gear having more teeth in the pair of gears, $\varepsilon_1$ is an approach contact ratio, and $\varepsilon_2$ is a recess contact ratio.

When the transverse contact ratio $\varepsilon_\alpha$ is $1 < \varepsilon_\alpha < 2$, then the expression 1 is applied, when the transverse contact ratio $\varepsilon_\alpha$ is $2 < \varepsilon_\alpha < 3$, the expression 2 is applied, and when the transverse contact ratio $\varepsilon_\alpha$ is $3 < \varepsilon_\alpha < 4$, the expression 3 is applied.

In the expressions 1 to 3, the approach contact ratio $\varepsilon_1$ is obtained from an angle between "a meshing start point and a meshing pitch point (an intersection between the line connecting the center points of both the gears and a meshing pitch circle)". The recess contact ratio $\varepsilon 2$ is obtained from the angle between "the meshing pitch point (an intersection of the line connecting the center points of both the gears and the meshing pitch circle) and a meshing end point". The transverse contact ratio $\varepsilon_\alpha$ is the sum of the approach contact ratio $\varepsilon_1$ and the recess contact ratio $\varepsilon 2$, that is, $\varepsilon_\alpha = \varepsilon_1 + \varepsilon_2$.

In the expressions 1 to 3, $z_1$ indicates the number of teeth of a gear having less teeth in the pair of gears, and $z_2$ indicates the number of teeth of a gear having more teeth in the pair of gears.

Table 3 below shows eight examples (gear pairs 1 to 8) of the actual contact ratio (transverse contact ratio) calculated by the method for calculating an actual contact ratio of thermoplastic resin gears of the present embodiment, and the coefficient of friction $\mu$ derived by applying Niemann's Formula (expressions 2 and 3) based on the actual contact ratio, together with the values of rotational speed, torque, and maximum temperature of tooth. Here, the "rotational speed" and the "torque" are the values of the gear on the driving side. The specifications such as the dimensions of the gear pairs used are shown below.

Gear geometry (driving side): spur gear (module: 1.0 mm, the number of teeth: 54, tooth width: 10 mm, pressure angle: 20°, and profile shift coefficient : 0)
Gear geometry (driven side): spur gear (module: 1.0 mm, the number of teeth: 54, tooth width: 10 mm, pressure angle: 20°, profile shift coefficient : 0)

In the gear pairs 1 to 8, the gear materials used are different as follows.

Gear pair 1: drive side: thermoplastic resin 1, driven side: thermoplastic resin 1
Gear pair 2: driving side: thermoplastic resin 2, driven side: thermoplastic resin 2
Gear pair 3: driving side: thermoplastic resin 3, driven side: thermoplastic resin 3
Gear pair 4: driving side: thermoplastic resin 4, driven side: thermoplastic resin 4
Gear pair 5: driving side: thermoplastic resin 5, driven side: thermoplastic resin 5
Gear pair 6: driving side: thermoplastic resin 6, driven side: thermoplastic resin 6
Gear pair 7: driving side: thermoplastic resin 1, driven side: thermoplastic resin 5
Gear pair 8: driving side: metal gear 1, driven side: thermoplastic resin 1

In the gear pair 8, the metal gear 1 used on the driving side is as follows.
Metal gear 1: SG1S 18L-1010 (spur gear (module: 1.0 mm, number of teeth: 18, tooth width: 10 mm, pressure angle: 20°, profile shift coefficient : 0)) made by Kyouiku Gear MFG. Co., Ltd.

The materials (thermoplastic resin) that constitute the gears used in the gear pairs 1 to 8 are shown below.

- Thermoplastic resin 1: Duracon (registered trademark) POM M90-44 (unfilled material) made by POLYPLASTICS CO., LTD.
- Thermoplastic resin 2: Duracon (registered trademark) POM NW-02 made by POLYPLASTICS CO., LTD.
- Thermoplastic resin 3: Duracon (registered trademark) POM YF-10 made by POLYPLASTICS CO., LTD.
- Thermoplastic resin 4: Duracon (registered trademark) POM M25-44 made by POLYPLASTICS CO., LTD.
- Thermoplastic resin 5: Duranex (registered trademark) PBT 2002 made by POLYPLASTICS CO., LTD.
- Thermoplastic resin 6: PA66 resin LEONA 1300G (filled with fibrous filler) made by Asahi Kasei Corporation

Figure 11 is a graph showing the relationship of the contact ratio relative to the maximum temperature of a tooth, in which a solid line represents the contact ratio without consideration of deformation, and a broken line represents the actual contact ratio calculated by the method for calculating an actual contact ratio of thermoplastic resin gears of the present embodiment described above (see Table 3). According to Figure 11, the contact ratio without consideration of deformation is constant in a prescribed temperature range, while the actual contact ratio varies with the maximum temperature of the tooth. Figure 12 is a graph showing the relationship of the coefficient of friction $\mu$ relative to the maximum temperature of the tooth in the gear pairs 1 to 8, in which a solid line represents a coefficient of friction $\mu$ derived by applying Niemann's Formula based on the contact ratio without consideration of deformation. Broken lines represent coefficients of friction $\mu$ (see Table 3) derived by applying Niemann's formula (expressions 2 and 3 above) based on the actual contact ratio calculated by the method for calculating an actual contact ratio of thermoplastic resin gears of the present embodiment described above in the gear pairs 1 to 8. According to Figure 12, the coefficient of friction $\mu$ derived based on the contact ratio without consideration of deformation varies with the maximum temperature of the tooth, while the coefficients of

friction μ in the respective gear pairs 1 to 8 derived by applying Niemann's formula (expressions 2 and 3 above) based on the actual contact ratio are roughly constant in a prescribed temperature range. Moreover, the coefficients of friction μ are mostly constant in all the gear pairs 1 to 8, which indicates that the coefficients of friction μ are mostly constant in a combination of the same thermoplastic resins as well as a combination of different thermoplastic resins, a combination of thermoplastic resins filled with fillers such as fibrous fillers, and a combination of a thermoplastic resin and a metal.

[Table 3]

| | Rotational speed (rpm) | Torque (Nm) | Maximum temperature (°C) | Transmission efficiency | Contact ratio | Coefficient of friction |
|---|---|---|---|---|---|---|
| Gear pair 1 | 100 | 5 | 46 | 0.952 | 2.82 | 0.30 |
| | 100 | 9 | 62 | 0.950 | 3.12 | 0.28 |
| | 200 | 9 | 91 | 0.945 | 3.36 | 0.29 |
| | 300 | 9 | 117 | 0.939 | 3.66 | 0.29 |
| Gear pair 2 | 100 | 5 | 47 | 0.949 | 2.82 | 0.32 |
| | 100 | 9 | 63 | 0.944 | 3.21 | 0.31 |
| | 200 | 9 | 95 | 0.941 | 3.15 | 0.33 |
| Gear pair 3 | 100 | 5 | 34 | 0.975 | 2.97 | 0.16 |
| | 100 | 9 | 42 | 0.975 | 3.24 | 0.14 |
| | 500 | 7 | 61 | 0.976 | 3.27 | 0.13 |
| | 900 | 5 | 61 | 0.977 | 3.06 | 0.14 |
| | 900 | 9 | 82 | 0.978 | 3.39 | 0.12 |
| Gear pair 4 | 100 | 5 | 35 | 0.969 | 2.94 | 0.20 |
| | 100 | 9 | 46 | 0.971 | 3.21 | 0.17 |
| | 300 | 7 | 63 | 0.969 | 3.27 | 0.18 |
| | 500 | 5 | 64 | 0.966 | 3.12 | 0.20 |
| | 500 | 9 | 92 | 0.968 | 3.54 | 0.17 |
| | 900 | 5 | 73 | 0.967 | 3.12 | 0.19 |
| Gear pair 5 | 100 | 3 | 37 | 0.964 | 2.67 | 0.24 |
| | 100 | 5 | 46 | 0.963 | 3.00 | 0.21 |
| | 100 | 7 | 58 | 0.949 | 3.42 | 0.26 |
| Gear pair 6 | 100 | 5 | 47 | 0.953 | 2.76 | 0.30 |
| | 200 | 9 | 80 | 0.954 | 3.18 | 0.25 |
| Gear pair 7 | 100 | 5 | 40 | 0.969 | 2.76 | 0.20 |
| | 100 | 9 | 55 | 0.961 | 3.21 | 0.21 |
| Gear pair 8 | 300 | 1.67 | 35 | 0.964 | 1.98 | 0.16 |
| | 300 | 3.00 | 46 | 0.961 | 2.07 | 0.16 |
| | 680 | 1.67 | 40 | 0.962 | 1.98 | 0.17 |
| | 680 | 3.00 | 62 | 0.961 | 2.13 | 0.16 |

Description is now given of examples (gear pairs 1', 3', 5' and 6') in which gears are applied with grease in the gear pairs 1, 3, 5, and 6. In the gear pairs 1', 3', 5' and 6', as in the gear pairs 1 to 8, an actual contact ratio was calculated by the method for calculating an actual contact ratio of thermoplastic resin gears of the present embodiment, and coefficients of friction μ were derived by applying Niemann's Formula (expressions 2 and 3 above) based on the actual contact ratio. Table 4 shows the respective actual contact ratios and the coefficients of friction μ. Figure 13 shows a graph representing the relationship of the coefficients of friction μ relative to the maximum temperature of the tooth in the gear pairs 1', 3', 5' and 6'.

According to Figure 13, the coefficient of friction μ derived based on the contact ratio without consideration of deformation varies with the maximum temperature of the tooth, while the coefficients of friction μ in the gear pairs 1', 3', 5' and 6' derived by applying Niemann's Formula (expressions 2 and 3 above) based on the actual contact ratio are mostly constant in a prescribed temperature range. It can also be confirmed that applying grease to the gears reduces the coefficient of friction of the gear pairs as compared with the same gear pairs not applied with grease.

[Table 4]

| | Rotational speed(rpm) | Torque(Nm) | Maximum temperature(°C) | Transmission efficiency | Contact ratio | Coefficient of friction |
|---|---|---|---|---|---|---|
| Gear pair 1' | 100 | 5 | 28 | 0.997 | 2.64 | 0.02 |
| | 100 | 9 | 32 | 0.993 | 2.91 | 0.04 |
| | 500 | 7 | 39 | 0.993 | 2.79 | 0.05 |
| | 900 | 5 | 39 | 0.995 | 2.64 | 0.03 |
| | 900 | 9 | 46 | 0.991 | 2.91 | 0.05 |
| Gear pair 3' | 900 | 5 | 38 | 0.989 | 2.70 | 0.07 |
| | 900 | 9 | 49 | 0.989 | 3.03 | 0.06 |
| Gear pair 5' | 900 | 5 | 46 | 0.987 | 2.97 | 0.06 |
| | 900 | 9 | 49 | 0.989 | 3.72 | 0.05 |
| Gear pair 6' | 100 | 5 | 29 | 0.989 | 2.70 | 0.07 |
| | 100 | 9 | 33 | 0.988 | 2.97 | 0.07 |
| | 900 | 5 | 41 | 0.986 | 2.70 | 0.09 |
| | 900 | 9 | 47 | 0.989 | 3.03 | 0.07 |

In the method for deriving a coefficient of friction of a thermoplastic resin gear of the present embodiment, the coefficient of friction of the resin gear can be derived as described in the foregoing. Since the coefficient of friction of the resin gears derived in the present embodiment is the coefficient of friction in consideration of an actual mode of sliding between gears, the coefficient of friction matches or is close to a value of the coefficient of friction of actual gears.

<Method for Predicting Tooth Root Temperature of Thermoplastic Resin Gear>

The method for predicting a tooth root temperature of a thermoplastic resin gear of the present embodiment includes three aspects including the first aspects to the third aspects, and in each of the aspects, an actual contact ratio of the thermoplastic resin gears and a coefficient of friction μ of the thermoplastic resin gear are substituted into any one of following expression 4 and expressions 5 to 7 to predict the tooth root temperature of the thermoplastic resin gear.
[Expression 9]

$$\theta_{\mathrm{Fu}\beta} \approx \theta_0 + P \cdot \mu \cdot H_v \cdot \left( \frac{k_{\theta,\mathrm{Fu}\beta}}{b \cdot m_n \cdot z \cdot v_t^c \cdot m_n^{-0.25}} + \frac{R_{\lambda,G}}{A_G} \right) \cdot ED^{0.64} \quad \cdots \text{Expression 4}$$

In the expression 4, $\theta_{Fu\beta}$ is the tooth root temperature (°C), $\theta_0$ is ambient temperature (°C), P is nominal output (2π x rotational speed x torque) (W), μ is the coefficient of friction of the thermoplastic resin gear, $k_{\theta,Fu\beta}$ is a heat storage factor that is a heat transfer coefficient (K· (m/s) $^{c}$·mm$^{1.75}$/W) of a pair of gears including at least one thermoplastic resin gear defined by VDI 2736 Blatt 2, b is a tooth width (mm), $m_n$ is a normal module (mm), z is a total number of teeth of the pair of gears (unless all the teeth on the entire circumference are meshed, only the number of teeth within a meshing range is counted), $v_t^c$ is a term of a heat dissipation factor, vt is a pitch circumference speed (m/s), c is a constant of 0.05 to 0.70, $R_{\lambda,G}$ is a housing thermal resistance (K·m$^2$/W), $A_G$ is a housing heat dissipation area (m$^2$), ED is relative meshing time per 10 minutes, and $H_v$ is a loss coefficient obtained by following expressions 5 to 7 depending on a value of the actual contact ratio.

[Expression 10]

$$1 < \varepsilon_\alpha < 2 \quad H_v = \frac{\pi \cdot (u+1)}{z_2 \cdot \cos\beta_b} \cdot (1 - \varepsilon_1 - \varepsilon_2 + \varepsilon_1^2 + \varepsilon_2^2) \quad \cdot\cdot\cdot \text{Expression 5}$$

$$2 < \varepsilon_\alpha < 3 \quad H_v = \frac{\pi \cdot (u+1)}{z_2 \cdot \cos\beta_b} \cdot \left(\frac{3 - \varepsilon_1 - \varepsilon_2 + \varepsilon_1^2 + \varepsilon_2^2}{3}\right) \quad \cdot\cdot\cdot \text{Expression 6}$$

$$3 < \varepsilon_\alpha < 4 \quad H_v = \frac{\pi \cdot (u+1)}{z_2 \cdot \cos\beta_b} \cdot \left(\frac{6 - 2\varepsilon_1 - 2\varepsilon_2 + \varepsilon_1^2 + \varepsilon_2^2}{3}\right) \quad \cdot\cdot\cdot \text{Expression 7}$$

where $\varepsilon_\alpha$ is a transverse contact ratio, u is a gear ratio $z_2/z_1$, $\beta_b$ is a base helix angle, $z_1$ is the number of teeth of a gear having fewer teeth in the pair of gears, $z_2$ is the number of teeth of a gear having more teeth in the pair of gears, $\varepsilon_1$ is an approach contact ratio, and $\varepsilon_2$ is a recess contact ratio.

In the expression 4, $H_v$: loss coefficient defined by VDI 2736 Blatt 2 differs depending on a transverse contact ratio $\varepsilon_\alpha$, and when the transverse contact ratio $\varepsilon_\alpha$ is $1 < \varepsilon_\alpha < 2$, the expression 5 is applied, when the transverse contact ratio $\varepsilon_\alpha$ is $2 < \varepsilon_\alpha < 3$, the expression 6 is applied, and when the transverse contact ratio $\varepsilon_\alpha$ is $3 < \varepsilon_\alpha < 4$, the expression 7 is applied.

In expressions 5 to 7, $z_1$, $z_2$, $\varepsilon_1$, and $\varepsilon_2$ are the same as $z_1$, $z_2$, $\varepsilon_1$, and $\varepsilon_2$ in expressions 1 to 3, and the descriptions given of the expressions 1 to 3 apply thereto without change.

In the first aspect, an actual contact ratio calculated by the method for calculating an actual contact ratio of thermoplastic resin gears of the present embodiment described above is used as the actual contact ratio of the thermoplastic resin gears, and a coefficient of friction $\mu$ calculated by any deriving method (except for the methods for deriving a coefficient of friction defined according to the method for driving a coefficient of friction of a thermoplastic resin gear of the present embodiment described above) is used as the coefficient of friction $\mu$ of the thermoplastic resin gear.

In the second aspect, a contact ratio without consideration of deformation is used as the actual contact ratio of the thermoplastic resin gears, and a coefficient of friction $\mu$ derived by the method for deriving a coefficient of friction of a thermoplastic resin gear of the present embodiment described above is used as the coefficient of friction $\mu$ of the thermoplastic resin gear.

In the third aspect, an actual contact ratio calculated by the method for calculating an actual contact ratio of thermoplastic resin gears of the present embodiment described above is used as the actual contact ratio of the thermoplastic resin gears, and a coefficient of friction $\mu$ derived by the method for deriving a coefficient of friction of a thermoplastic resin gear of the present embodiment described above is used as the coefficient of friction $\mu$ of the thermoplastic resin gear.

In the first aspect, the coefficient of friction $\mu$ of the thermoplastic resin gear is calculated by any measuring method, though examples of the any measuring method may include the pin-on-disk method, ring-on-ring method, ball-on-disk method, and the like, except the methods for measuring a coefficient of friction defined according to the method for driving a coefficient of friction of a thermoplastic resin gear of the present embodiment described above.

In the first aspect, the contact ratio (actual contact ratio), calculated by the method for calculating an actual contact ratio of thermoplastic resin gears of the present embodiment described above in consideration of the tooth temperature and the tooth deformation, is used as the actual contact ratio of the thermoplastic resin gears, which makes it possible to improve the accuracy of predicting the tooth root temperature of the resin gears.

In the second aspect, the contact ratio without consideration of deformation is used as the contact ratio of the thermoplastic resin gear.

In the second aspect, since the friction coefficient $\mu$, derived by the method for deriving a coefficient of friction of a thermoplastic resin gear of the present embodiment described above, is used as the coefficient of friction, the coefficient of friction $\mu$ is a value that is matched with or close to the coefficient of friction of actual gears, which makes it possible to improve the accuracy of predicting the tooth root temperature of the resin gears.

In the third aspect, as both the actual contact ratio of the thermoplastic resin gears and the coefficient of friction $\mu$ of the thermoplastic resin gear, those calculated or derived in the present embodiment described above are used. Specifically, the "actual contact ratio" and the "coefficient of friction $\mu$" of the resin gears corresponding to the measurement conditions are substituted into the tooth root temperature prediction expression expressed as the expression 4. Therefore, the third aspect is the highest in accuracy of predicting the tooth root temperature of the resin gears.

Figure 14 shows the relationship between predicted temperature and measured temperature of the tooth root of the resin gears applied with the third aspect. In Figure 14, each plot represents the relationship between the predicted temperature and the measured temperature (each plot) of the tooth root in the case of using the same gear pairs as the gear pairs 1 to 7 described above. A broken line represents the case where the predicted temperature is equal to the measured temperature. As shown in Figure 14, in all the gear pairs, the predicted temperatures and the measured temperatures of the tooth root temperature are mostly matched.

Description is given of the examples of evaluating the tooth root temperature predicted for the gear pairs 1', 3', 5' and 6' with grease applied to the gears as described above. Figure 15 shows the relationship between predicted temperature and measured temperature of the tooth root of the resin gears applied with the third aspect as in the case of Figure 14 described above. As shown in Figure 15, in all the examples, the predicted temperatures and the measured temperatures of the tooth root temperature are mostly matched. This indicates that even with the grease applied to the gears, the tooth root temperature of the gears can be predicted.

Figure 16 shows the relationship between the predicted temperature and the measured temperature of the tooth root for the gear pairs 8 to 11. The gear pairs 8 to 11 all has a combination of a resin gear and a metal gear. The gear pair 8, which has been described before, is described again below. The gear pairs 9 to 11 have following combinations.

Gear pair 8: driving side: metal gear 1, driven side: thermoplastic resin 1
Gear pair 9: driving side: metal gear 2, driven side: thermoplastic resin 1
Gear pair 10: driving side: metal gear 3, driven side: thermoplastic resin 1
Gear pair 11: driving side: metal gear 4, driven side: thermoplastic resin 1

Metal gear 1: SG1S 18L-1010 (spur gear (module: 1.0 mm, number of teeth: 18, tooth width: 10 mm, pressure angle: 20°, profile shift coefficient : 0)) made by Kyouiku Gear MFG. Co., Ltd.
Metal gear 2: SG1S 54B-1012 (spur gear (module: 1.0 mm, number of teeth: 54, tooth width: 10 mm, pressure angle: 20°, profile shift coefficient : 0)) made by Kyouiku Gear MFG. Co., Ltd.
Metal gear 3: SG1S 35B-1010 (spur gear (module: 1.0 mm, number of teeth: 35, tooth width: 10 mm, pressure angle: 20°, profile shift coefficient : 0)) made by Kyouiku Gear MFG. Co., Ltd.
Metal gear 4: SG1S 14L-1008 (spur gear (module: 1.0 mm, number of teeth: 14, tooth width: 10 mm, pressure angle: 20°, profile shift coefficient : 0)) made by Kyouiku Gear MFG. Co., Ltd.

Note that the metal gear 2 is subjected to key groove machining. The metal gear 3 is also machined to have an inner gear diameter of 12 mm while being subjected to the key groove machining.

According to Figure 16, in the combination of the resin gear and the metal gear, the predicted temperatures and the measured temperatures of the tooth root temperature are also mostly matched.

In all the gear pairs 1 to 11 described above, the predicted temperatures and the measured temperatures of the tooth root temperature are mostly matched, which indicates that the tooth root temperature can accurately be predicted by using the coefficient of friction of the resin gears derived in the present embodiment, in the combination of the same thermoplastic resins as well as the combination of different thermoplastic resins, the combination of the thermoplastic resins filled with fillers such as fibrous fillers, and the combination of the thermoplastic resin and the metal.

In contrast, Figure 17 shows the relationship between predicted temperature (solid line) and measured temperature (broken line) of the tooth root of the resin gears applied with the second aspect. There is a slight deviation between the predicted temperature and the measured temperature. The results from Figures 14 to 17 indicate that the third aspect shown in Figures 14 to 16 is higher in prediction accuracy.

In the case of the combination of resin gears, it is preferable, for improving the accuracy of predicting the tooth root temperature of the resin gears, to execute at least one of: setting the number of teeth z in the expression 4 to a total number of teeth of a pair of gears; setting c in the expression 4 to 0.10 to 0.60; and setting $k_{\theta,\ Fu\beta}$ in the expression 4 to (A·ln(b) + B) to (A·ln(b) + C) (where b is a tooth width (mm), A is 1130 to 3610, B is -1.782A + 3286, and C is -1.728A + 5291). To further improve the accuracy of predicting the tooth root temperature, it is preferable to set A to 1770 to 2890, set B to -1.907A + 3943, and set C to -2.154A + 5647.

In the case of the combination of the resin gear and the metal gear, it is preferable to perform followings: setting the number of teeth z in the expression 4 to a total number of teeth of the pair of gears (counting only the number of teeth within a meshing range unless all the teeth on the entire circumference are meshed); setting c in the expression 4 to 0.10 to 0.60; and setting $k_{\theta,Fu\beta}$ to (A·ln(b) + B) to (A·ln(b) + C) (where b is a tooth width (mm), A is 100 to 2000, B is -2.284A + 1424, and C is - 2.316A + 3637). To further improve the accuracy of predicting the tooth root temperature, it is preferable to set A to 550-1550, B to -2.300A + 1981, and C to - 2.300A + 3111.

This will be described below.

Figure 18 shows the relationship between the predicted temperature and the measured temperature of the tooth root of resin gears in the third aspect in the case of setting the number of teeth z in the expression 4 to the total number of teeth of the pair of gears (counting only the number of teeth within a meshing range unless all the teeth on the entire circumference are meshed) (i.e., $z = z_1 + z_2$). Figure 18 shows four pairs of gears (indicated by plots of black circle, square, black triangle, and white triangle, respectively), and each pair of gears has a different number of teeth. The black circle plot has $z_1 = 54$ and $z_2 = 54$, the square plot has $z_1 = 23$ and $z_2 = 23$, the black triangle plot has $z_1 = 23$ and $z_2 = 54$, and the white triangle plot has $z_1 = 14$ and $z_2 = 23$. According to Figure 18, in all the pairs of gears, the predicted temperatures and the measured temperatures of the tooth root temperature are mostly matched. Figure 19 shows the relationship between the predicted temperature and the measured temperature of the tooth root of resin gears in the first aspect when the number of teeth z in the expression 4 is the number of teeth $z_1$ of the gear having less teeth (i.e., $z = z_1$). The plots of black circle, square, black triangle, and white triangle in Figure 19 are the same as in Figure 18. In other words, the pairs of gears to be measured are the same in Figures 18 and 19. According to Figure 19, some of the predicted temperatures and the measured temperatures about the tooth root temperature are not matched.

As described in the foregoing, in the case of setting the number of teeth z in the expression 4 to the total number of teeth of the pair of gears (counting only the number of teeth within a meshing range unless all the teeth on the entire circumference are meshed), the accuracy of predicting the tooth root temperature is improved. This is considered to be because the area of the tooth root to which heat flows can be accurately reflected even in combinations of different number of teeth. For example, when the number of teeth (unless all the teeth on the entire circumference are meshed, only the number of teeth within a meshing range is counted) is doubled, the area to which heat flows is doubled and an increase in temperature is halved. However, such temperature increase is not reflected when the number of teeth is set to the number of teeth of one of the gears.

On the other hand, optimizing the heat dissipation index that indicates the degree of effect of heat dissipation in the expression 4 makes it possible to mostly match the predicted values of the tooth root temperature with the measured values in the entire temperature range regardless of the rotational speed. The heat dissipation factor is the term $v_t^c$ in the expression 4. Although the constant c is set to 0.05 to 0.70, the constant c is preferably set to 0.10 to 0.60 and more preferably set to 0.15 to 0.55 in order to optimize the heat dissipation factor and improve the accuracy of predicting the tooth root temperature.

Furthermore, optimizing a heat storage factor that indicates the degree of effect of heat storage makes it possible to mostly match the predicted values of the tooth root temperature with the measured values. As for the effect of heat storage due to the tooth width of the gears, the larger the tooth width, the greater the temperature increase due to heat storage. The heat storage factor is $k_{\theta,Fu\beta}$ in the expression 4, and using $k_{\theta,Fu\beta}$ as the function of tooth width b can optimize the heat storage factor. In the present embodiment, in the case of a combination of resin gears, it is preferably to set, as the function in consideration of the heat storage factor due to difference in tooth width, $k_{\theta,Fu\beta}$ to $(A \cdot \ln(b) + B)$ to $(A \cdot \ln(b) + C)$ (where b is a tooth width (mm), A is 1130 to 3610, B is -1.782A + 3286, C is -1.728A + 5291), and to further improve the accuracy of predicting the tooth root temperature, it is more preferable to set A to 1770 to 2890, B to -1.907A + 3943, and C to -2.154A + 5647.

On the other hand, in the case of a combination of the resin gear and the metal gear, it is preferable to set $k_{\theta,Fu\beta}$ in the expression 4 to $(A \cdot \ln(b) + B)$ to $(A \cdot \ln(b) + C)$ (where b is a tooth width (mm), A is 100 to 2000, B is -2.284A + 1424, and C is -2.316A + 3637), and to further improve the accuracy of predicting the tooth root temperature, it is preferable to set A to 550-1550, B to -2.300A + 1981, and C to -2.300A + 3111. Such setting makes it possible to improve the accuracy of predicting the tooth root temperature even when the tooth width changes.

Figure 20 shows predicted temperatures and measured temperatures of the tooth root temperature in the third aspect when the heat storage factor is optimized. That is the case where $k_{\theta,Fu\beta}$ in the expression 4 is set to $k_{\theta,Fu\beta} = 475b + 1417$ (where b is the tooth width in mm). In Figure 20, the plots of black circle, square, black triangle and white triangle represent the cases of tooth width: 3 mm, tooth width: 5 mm, tooth width: 7.5 mm, and tooth width: 10 mm, respectively. In all the cases, it is clear that the predicted temperatures and the measured temperatures are mostly matched. In contrast, Figure 21 shows the predicted temperatures and the measured temperatures of the tooth root temperature in the third aspect when the heat storage factor is not optimized. Figure 21 is different from Figure 20 only in that the heat storage factor is not optimized, and is the same as Figure 20 in the resin gears to be measured and in plots. According to Figure 21, some of the predicted temperatures and the measured temperatures about the tooth root temperature are not matched. This indicates that optimizing the heat storage factor makes it possible to mostly match the predicted values of the tooth root temperature with the measured values even when the tooth width of the gears is different.

<Method for Predicting fatigue Life of Thermoplastic Resin Gear>

A method for predicting fatigue life of a thermoplastic resin gear of the present embodiment includes a step 9 of preparing an S-N curve of the thermoplastic resin gear for each tooth temperature of the thermoplastic resin gear. Then, the fatigue life of the thermoplastic resin gear is predicted based on the S-N curve corresponding to a tooth root temperature obtained by the method for predicting a tooth root temperature of a thermoplastic resin gear of the present embodiment described above.

In the method for predicting fatigue life of a thermoplastic resin gear of the present embodiment, the S-N curve of the resin gear is prepared for each gear tooth temperature in advance (step 9). Then, the fatigue life is predicted based on the S-N curve corresponding to the tooth root temperature obtained by the method for predicting a tooth root temperature of a thermoplastic resin gear of the present embodiment described above. Since the accuracy of the tooth root temperature obtained by the method for predicting a tooth root temperature of the present embodiment is high, the accuracy of predicting the fatigue life can also be increased.

In the step 9, the S-N curve of the thermoplastic resin gear is prepared for each tooth temperature of the thermoplastic resin gear. The S-N curve, which is also called a fatigue life curve, shows the relationship between tooth root bending stress and fatigue life (the number of times of meshing until failure) of the resin gear. More specifically, the S-N curve, which is used to obtain fatigue strength of resin gears in fatigue tests, indicates in logarithm the number of stress cycles that are repeated application of each constant tooth root bending stress to a large number of resin gears until failure, the S-N curve being a right downward curve graphed with a horizontal axis being plotted as the logarithm of the number of stress cycles and the vertical axis as the logarithm of amplitude stress.

In the step 9, the S-N curve is prepared for each temperature of a gear tooth. The phrase "for each temperature" is used in the context that the S-N curve is prepared for each temperature, such as 30°C, 40°C, 50°C ..., for example.

In the present embodiment, the tooth root temperature obtained by the method for predicting a tooth root temperature of a thermoplastic resin gear of the present embodiment described above is used. The S-N curve corresponding to the obtained tooth root temperature is selected, though when there is no S-N curve at the temperature matching the tooth root temperature, the fatigue life of the resin gear can be predicted based on an estimated S-N curve at the tooth root temperature obtained by extrapolation or interpolation.

Reference Signs List

| | |
|---|---|
| 10 20 | Gears |
| 12 22 | Tooth |
| 30 | Tester |
| 32 | Shaft |
| 34 | Load adding lever |

**Claims**

**1.** A method for calculating an actual contact ratio of a pair of gears including at least one thermoplastic resin gear, comprising:

a step 1 of rotating the pair of gears including at least one thermoplastic resin gear at a prescribed rotational speed while the gears are meshed with each other, and measuring a temperature distribution of the pair of gears;
a step 2 of creating a structural analysis model A having a geometry identical to the pair of gears using CAE, and inputting temperatures acquired from the temperature distribution of the pair of gears measured in the step 1 into the structural analysis model A to calculate a temperature distribution of the structural analysis model A by CAE structural analysis;
a step 3 of preparing data on temperature dependency of an elastic modulus a of thermoplastic resin that constitutes the pair of gears;
a step 4 of performing a step 4a and a step 4b in any order,
the step 4a including using the CAE structural analysis to calculate, based on the temperature distribution of the structural analysis model A calculated in the step 2 and the data on temperature dependency of the elastic modulus a prepared in the step 3, a location where a maximum tensile strain is generated in a tooth root strain distribution of meshing teeth when the pair of gears are meshed, and correcting the elastic modulus a or an elastic modulus obtained in the step 4b below in accordance with a strain rate dependency of the elastic modulus of the gears in the structural analysis model A that is calculated from the location where the maximum tensile strain is generated in the strain distribution,
and
the step 4b including measuring an actual amount of deformation of the pair of gears, calculating an amount of deformation by the CAE structural analysis using a CAE structural analysis model B created so as to reflect the actual amount of deformation and having a same geometry as the pair of gears, and then obtaining a ratio X between the actual amount of deformation and the amount of deformation by the CAE structural analysis to correct the elastic modulus a or the elastic modulus obtained in the step 4a in accordance with the ratio X;
a step 5 of using a corrected elastic modulus ' a' obtained in the step 4 to calculate a contact stress distribution when a prescribed torque is applied to a drive side gear in the pair of gears by the CAE structural analysis;
a step 6 of calculating an angular difference between a meshing start point and a meshing end point of the pair of gears based on the contact stress distribution calculated in the step 5; and
a step 7 of dividing the angular difference calculated in the step 6 by an angle corresponding to a circular pitch of the pair of gears (360°/number of teeth) to calculate the actual contact ratio of the pair of gears.

**2.** A method for deriving a coefficient of friction of a thermoplastic resin gear, comprising a step 8 of measuring a transmission efficiency $\eta$ of torque transmitted from a drive gear to a driven gear of a pair of gears, wherein the coefficient of friction of the thermoplastic resin gear is derived using a transmission loss formula for a gear based on an actual contact ratio calculated by the method for calculating an actual contact ratio of thermoplastic resin gears according to claim 1 and the transmission efficiency $\eta$ of the torque measured in the step 8.

**3.** The method for deriving a coefficient of friction of a thermoplastic resin gear according to claim 2, wherein the coefficient of friction of the thermoplastic resin gear is derived by substituting the actual contact ratio into any one of following expressions 1 to 3 depending on a value of the actual contact ratio:

[Expression 1]

$$1 < \varepsilon_\alpha < 2 \qquad \eta = 1 - \frac{\mu \cdot \pi \cdot (u+1)}{z_2 \cdot \cos\beta_b} \cdot (1 - \varepsilon_1 - \varepsilon_2 + \varepsilon_1^2 + \varepsilon_2^2) \quad \cdots \text{Expression 1}$$

$$2 < \varepsilon_\alpha < 3 \qquad \eta = 1 - \frac{\mu \cdot \pi \cdot (u+1)}{z_2 \cdot \cos\beta_b} \cdot \left(\frac{3 - \varepsilon_1 - \varepsilon_2 + \varepsilon_1^2 + \varepsilon_2^2}{3}\right) \quad \cdots \text{Expression 2}$$

$$3 < \varepsilon_\alpha < 4 \qquad \eta = 1 - \frac{\mu \cdot \pi \cdot (u+1)}{z_2 \cdot \cos\beta_b} \cdot \left(\frac{6 - 2\varepsilon_1 - 2\varepsilon_2 + \varepsilon_1^2 + \varepsilon_2^2}{3}\right) \quad \cdots \text{Expression 3}$$

where $\varepsilon_\alpha$ is a transverse contact ratio, $\eta$ is transmission efficiency of torque, $\mu$ is the coefficient of friction of the thermoplastic resin gear, u is a gear ratio $z_2/z_1$, $\beta_b$ is a base helix angle, $z_1$ is the number of teeth of a gear having fewer teeth in the pair of gears, $z_2$ is the number of teeth of a gear having more teeth in the pair of gears, $\varepsilon_1$ is an approach contact ratio, and $\varepsilon_2$ is a recess contact ratio.

**4.** A method for predicting a tooth root temperature of a thermoplastic resin gear, comprising predicting a tooth root temperature of a thermoplastic resin gear by substituting an actual contact ratio calculated by the method for calculating an actual contact ratio of thermoplastic resin gears according to claim 1 and a coefficient of friction $\mu$ derived by any derivation method (except for the method for deriving a coefficient of friction of a thermoplastic resin gear according to the claim 2) into any one of a following expression 4 and following expressions 5 to 7:
[Expression 2]

$$\theta_{\mathrm{Fu}\beta} \approx \theta_0 + P \cdot \mu \cdot H_v \cdot \left(\frac{k_{\theta,\mathrm{Fu}\beta}}{b \cdot m_n \cdot z \cdot v_t^c \cdot m_n^{-0.25}} + \frac{R_{\lambda,G}}{A_G}\right) \cdot ED^{0.64} \quad \cdots \text{Expression 4}$$

where $\theta_{Fu\beta}$ is the tooth root temperature (°C), $\theta_0$ is ambient temperature (°C), P is nominal output ($2\pi$ x rotational speed x torque) (W), $\mu$ is the coefficient of friction of the thermoplastic resin gear, ke, $_{Fu\beta}$ is a heat storage factor that is a heat transfer coefficient ($K\cdot(m/s)^c\cdot mm^{1\cdot 75}/W$) defined by VDI 2736 Blatt 2 for a pair of gears including at least one thermoplastic resin gear, b is a tooth width (mm), $m_n$ is a normal module (mm), z is a total number of teeth of the pair of gears (unless all the teeth on the entire circumference are meshed, only the number of teeth within a meshing range is counted), $v_t^c$ is a term of a heat dissipation factor, $v_t$ is a pitch circumference speed (m/s), c is a constant of 0.05 to 0.70, $R_{\lambda,G}$ is a housing thermal resistance ($K\cdot m^2/W$), $A_G$ is a housing heat dissipation area ($m^2$), ED is relative meshing time per 10 minutes, and $H_v$ is a loss coefficient obtained by following expressions 5 to 7 depending on a value of the actual contact ratio.

[Expression 3]

$$1 < \varepsilon_\alpha < 2 \quad H_v = \frac{\pi \cdot (u+1)}{z_2 \cdot \cos\beta_b} \cdot (1 - \varepsilon_1 - \varepsilon_2 + \varepsilon_1^2 + \varepsilon_2^2) \quad \cdots \text{ Expression 5}$$

$$2 < \varepsilon_\alpha < 3 \quad H_v = \frac{\pi \cdot (u+1)}{z_2 \cdot \cos\beta_b} \cdot \left(\frac{3 - \varepsilon_1 - \varepsilon_2 + \varepsilon_1^2 + \varepsilon_2^2}{3}\right) \quad \cdots \text{ Expression 6}$$

$$3 < \varepsilon_\alpha < 4 \quad H_v = \frac{\pi \cdot (u+1)}{z_2 \cdot \cos\beta_b} \cdot \left(\frac{6 - 2\varepsilon_1 - 2\varepsilon_2 + \varepsilon_1^2 + \varepsilon_2^2}{3}\right) \quad \cdots \text{ Expression 7}$$

where $\varepsilon_\alpha$ is a transverse contact ratio, u is a gear ratio $z_2/z_1$, $\beta_b$ is a base helix angle, $z_1$ is the number of teeth of a gear having fewer teeth in the pair of gears, $z_2$ is the number of teeth of a gear having more teeth in the pair of gears, ε1 is an approach contact ratio, and $\varepsilon_2$ is a recess contact ratio.

**5.** A method for predicting a tooth root temperature of a thermoplastic resin gear, comprising predicting the tooth root temperature of the thermoplastic resin gear by substituting a contact ratio without consideration of deformation and a coefficient of friction μ derived by the method for deriving a coefficient of friction of a thermoplastic resin gear according to claim 2 into following expressions 4 and 5 to 7:
[Expression 4]

$$\theta_{Fu\beta} \approx \theta_0 + P \cdot \mu \cdot H_v \cdot \left(\frac{k_{\theta,Fu\beta}}{b \cdot m_n \cdot z \cdot v_t^c \cdot m_n^{-0.25}} + \frac{R_{\lambda,G}}{A_G}\right) \cdot ED^{0.64} \quad \cdots \text{ Expression 4}$$

where $\theta_{Fu\beta}$ is the tooth root temperature (°C), $\theta_0$ is ambient temperature (°C), P is nominal output (2π x rotational speed x torque) (W), μ is the coefficient of friction of the thermoplastic resin gear, ke, $_{Fu\beta}$ is a heat storage factor that is a heat transfer coefficient (K·(m/s)$^c$·mm$^{1.75}$/W) defined by VDI 2736 Blatt 2 for a pair of gears including at least one thermoplastic resin gear, b is a tooth width (mm), $m_n$ is a normal module (mm), z is a total number of teeth of the pair of gears (unless all the teeth on the entire circumference are meshed, only the number of teeth within a meshing range is counted), $v_t^c$ is a term of a heat dissipation factor, $v_t$ is a pitch circumference speed (m/s), c is a constant of 0.05 to 0.70, $R_{\lambda,G}$ is a housing thermal resistance (K·m$^2$/W), $A_G$ is a housing heat dissipation area (m$^2$), ED is relative meshing time per 10 minutes, and $H_v$ is a loss coefficient obtained by following expressions 5 to 7 depending on a value of the actual contact ratio.

[Expression 5]

$$1 < \varepsilon_\alpha < 2 \quad H_v = \frac{\pi \cdot (u+1)}{z_2 \cdot \cos\beta_b} \cdot (1 - \varepsilon_1 - \varepsilon_2 + \varepsilon_1^2 + \varepsilon_2^2) \quad \cdots \text{ Expression 5}$$

$$2 < \varepsilon_\alpha < 3 \quad H_v = \frac{\pi \cdot (u+1)}{z_2 \cdot \cos\beta_b} \cdot \left(\frac{3 - \varepsilon_1 - \varepsilon_2 + \varepsilon_1^2 + \varepsilon_2^2}{3}\right) \quad \cdots \text{ Expression 6}$$

$$3 < \varepsilon_\alpha < 4 \quad H_v = \frac{\pi \cdot (u+1)}{z_2 \cdot \cos\beta_b} \cdot \left(\frac{6 - 2\varepsilon_1 - 2\varepsilon_2 + \varepsilon_1^2 + \varepsilon_2^2}{3}\right) \quad \cdots \text{ Expression 7}$$

where $\varepsilon_\alpha$ is a transverse contact ratio, u is a gear ratio $z_2/z_1$, $\beta_b$ is a base helix angle, $z_1$ is the number of teeth of a gear having fewer teeth in the pair of gears, $z_2$ is the number of teeth of a gear having more teeth in the pair of gears, $\varepsilon_1$ is an approach contact ratio, and $\varepsilon_2$ is a recess contact ratio.

**6.** A method for predicting a tooth root temperature of a thermoplastic resin gear, comprising
predicting the tooth root temperature of the thermoplastic resin gear by substituting an actual contact ratio calculated by the method for calculating an actual contact ratio of thermoplastic resin gears according to claim 1 and a coefficient of friction $\mu$ derived by the method for deriving a coefficient of friction of a thermoplastic resin gear according to claim 2 into following expressions 4 and 5 to 7:
[Expression 6]

$$\theta_{Fu\beta} \approx \theta_0 + P \cdot \mu \cdot H_v \cdot \left(\frac{k_{\theta,Fu\beta}}{b \cdot m_n \cdot z \cdot v_t^c \cdot m_n^{-0.25}} + \frac{R_{\lambda,G}}{A_G}\right) \cdot ED^{0.64} \quad \cdots \text{ Expression 4}$$

where $\theta_{Fu\beta}$ is the tooth root temperature (°C), $\theta_0$ is ambient temperature (°C), P is nominal output ($2\pi$ x rotational speed x torque) (W), $\mu$ is the coefficient of friction of the thermoplastic resin gear, ke, $_{Fu\beta}$ is a heat storage factor that is a heat transfer coefficient ($K \cdot (m/s)^c \cdot mm^{1.75}/W$) defined by VDI 2736 Blatt 2 for a pair of gears including at least one thermoplastic resin gear, b is a tooth width (mm), $m_n$ is a normal module (mm), z is a total number of teeth of the pair of gears (unless all the teeth on the entire circumference are meshed, only the number of teeth within a meshing range is counted), $v_t^c$ is a term of a heat dissipation factor, $v_t$ is a pitch circumference speed (m/s), c is a constant of 0.05 to 0.70, $R_{\lambda,G}$ is a housing thermal resistance ($K \cdot m^2/W$), $A_G$ is a housing heat dissipation area ($m^2$), ED is relative meshing time per 10 minutes, and $H_v$ is a loss coefficient obtained by following expressions 5 to 7 depending on a value of the actual contact ratio.

[Expression 7]

$$1 < \varepsilon_\alpha < 2 \quad H_v = \frac{\pi \cdot (u+1)}{z_2 \cdot \cos\beta_b} \cdot (1 - \varepsilon_1 - \varepsilon_2 + \varepsilon_1^2 + \varepsilon_2^2) \quad \cdots \text{Expression 5}$$

$$2 < \varepsilon_\alpha < 3 \quad H_v = \frac{\pi \cdot (u+1)}{z_2 \cdot \cos\beta_b} \cdot \left(\frac{3 - \varepsilon_1 - \varepsilon_2 + \varepsilon_1^2 + \varepsilon_2^2}{3}\right) \quad \cdots \text{Expression 6}$$

$$3 < \varepsilon_\alpha < 4 \quad H_v = \frac{\pi \cdot (u+1)}{z_2 \cdot \cos\beta_b} \cdot \left(\frac{6 - 2\varepsilon_1 - 2\varepsilon_2 + \varepsilon_1^2 + \varepsilon_2^2}{3}\right) \quad \cdots \text{Expression 7}$$

where $\varepsilon_\alpha$ is a transverse contact ratio, u is a gear ratio $z_2/z_1$, $\beta_b$ is a base helix angle, $z_1$ is the number of teeth of a gear having fewer teeth in the pair of gears, $z_2$ is the number of teeth of a gear having more teeth in the pair of gears, $\varepsilon_1$ is an approach contact ratio, and $\varepsilon_2$ is a recess contact ratio.

**7.** The method for predicting a tooth root temperature of a thermoplastic resin gear according to any one of claims 4 to 6, wherein
when the pair of gears is a combination of thermoplastic resin gears, at least one of followings is executed: setting the number of teeth z in the expression 4 to a total number of teeth of the pair of gears (counting only the number of teeth within a meshing range unless all the teeth on the entire circumference are meshed); setting c in the expression 4 to 0.10 to 0.60; and setting $k_{\theta,Fu\beta}$ in the expression 4 to (A·ln(b) + B) to (A·ln(b) + C) (where b is a tooth width (mm), A is 1130 to 3610, B is -1.782A + 3286, and C is -1.728A + 5291).

**8.** The method for predicting a tooth root temperature of a thermoplastic resin gear according to any one of claims 4 to 6, wherein
when the pair of gears is a combination of the thermoplastic resin gear and a metal gear, at least one of followings is executed: setting the number of teeth z in the expression 4 to a total number of teeth of the pair of gears (counting only the number of teeth within a meshing range unless all the teeth on the entire circumference are meshed); setting c in the expression 4 to 0.10 to 0.60; and setting $k_{\theta,Fu\beta}$ in the expression 4 to (A·ln(b) + B) to (A·ln(b) + C) (where b is a tooth width (mm), A is 100 to 2000, B is -2.284A+1424, and C is - 2.316A + 3637).

**9.** A method for predicting fatigue life of a thermoplastic resin gear, comprising a step 9 of preparing an S-N curve of the thermoplastic resin gear for each tooth temperature of the thermoplastic resin gear, wherein
the fatigue life of the thermoplastic resin gear is predicted based on the S-N curve corresponding to a tooth root temperature obtained by the method for predicting a tooth root temperature of a thermoplastic resin gear according to any one of claims 4 to 8.

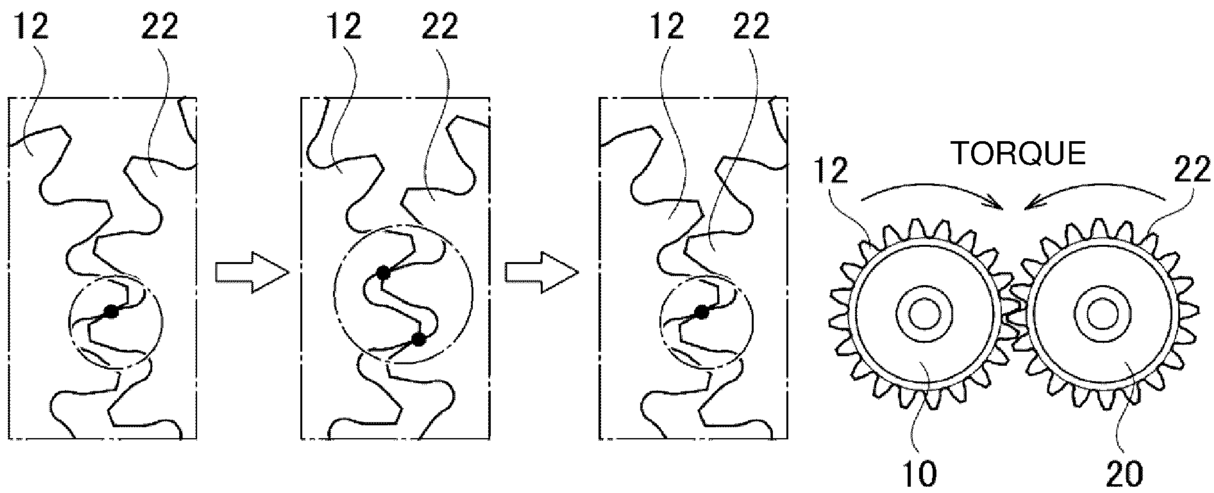


FIG. 1A FIG. 1B FIG. 1C FIG. 1D

FIG. 2

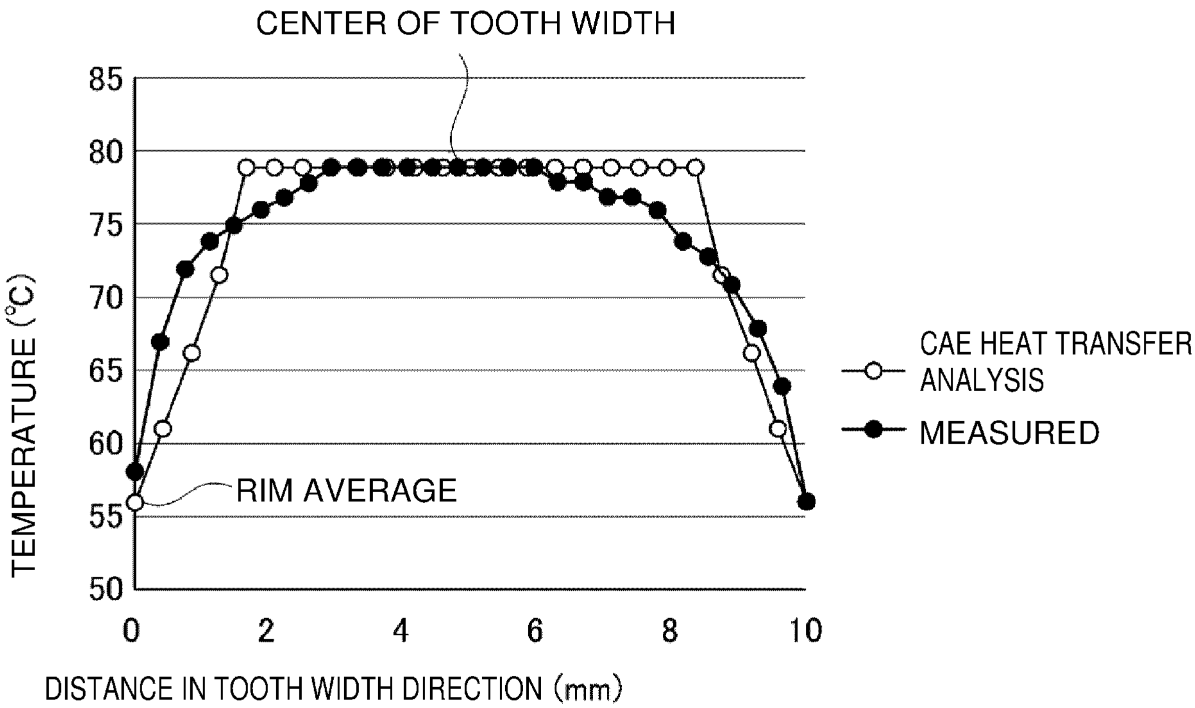

FIG. 3

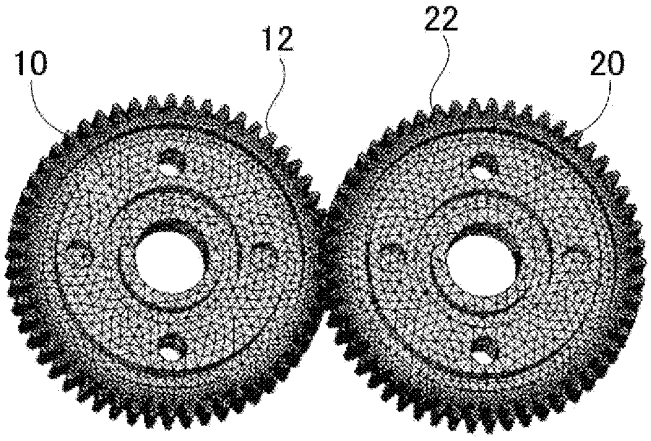


FIG. 4

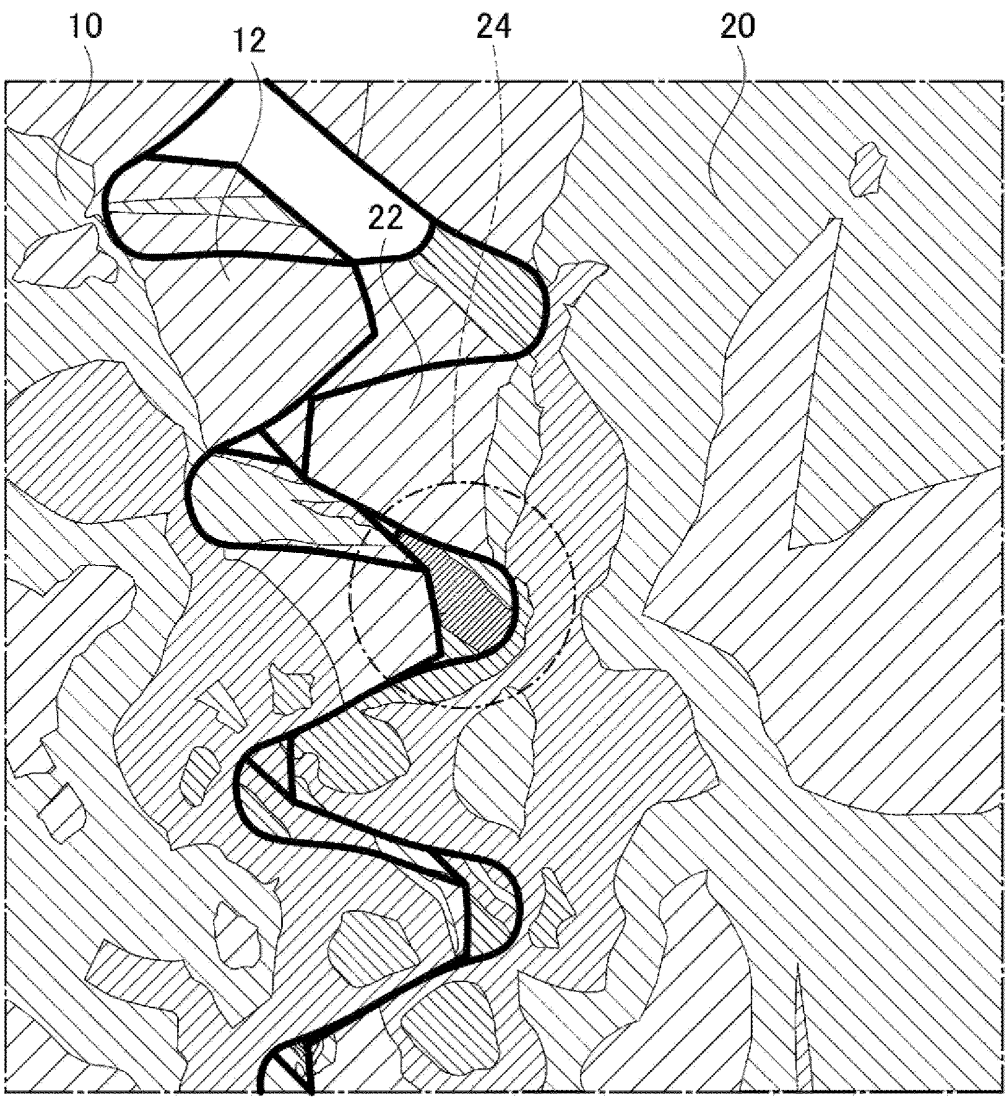

FIG. 5

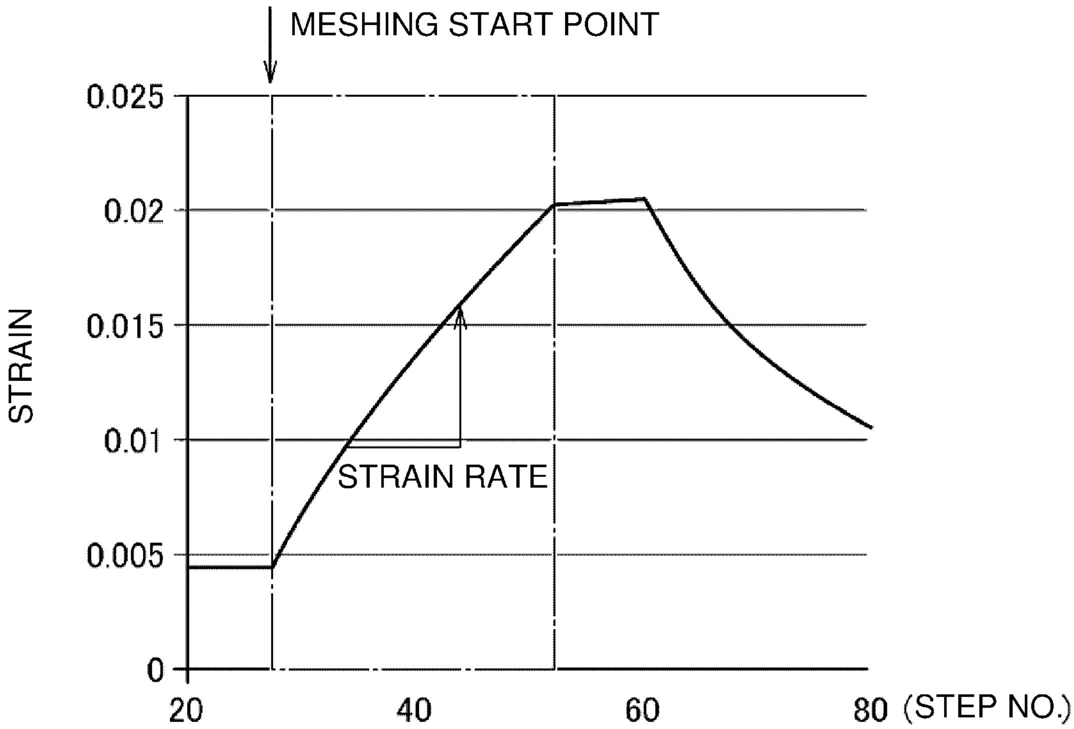
MESHING START POINT
0.025
0.02
0.015
0.01
0.005
0
STRAIN
STRAIN RATE
20
40
60
80
(STEP NO.)

FIG. 6

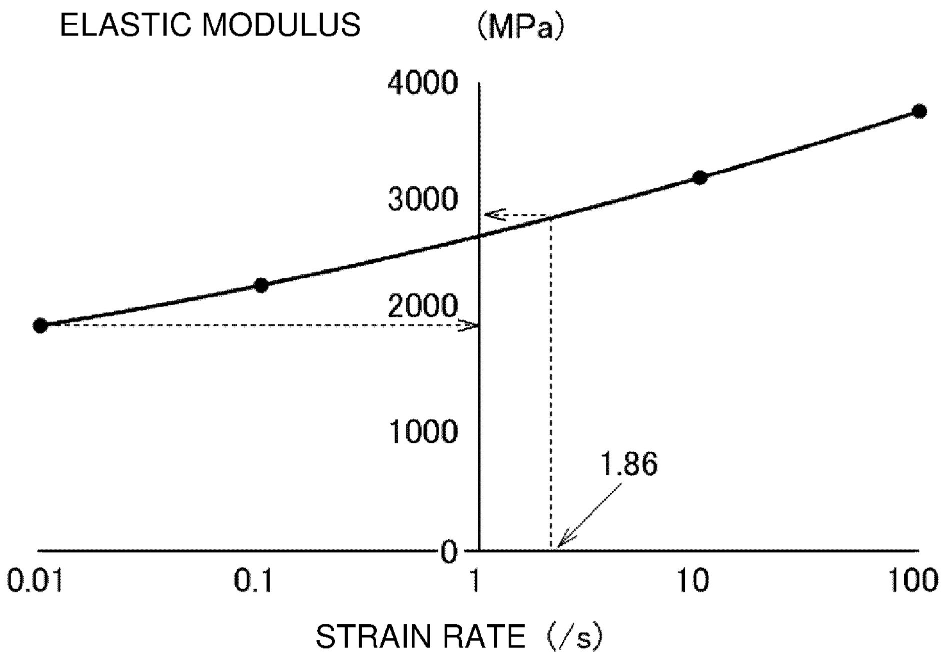
ELASTIC MODULUS
(MPa)
4000
3000
2000
1000
0
1.86
0.01
0.1
1
10
100
STRAIN RATE (/s)

FIG. 7A

FIG. 7B

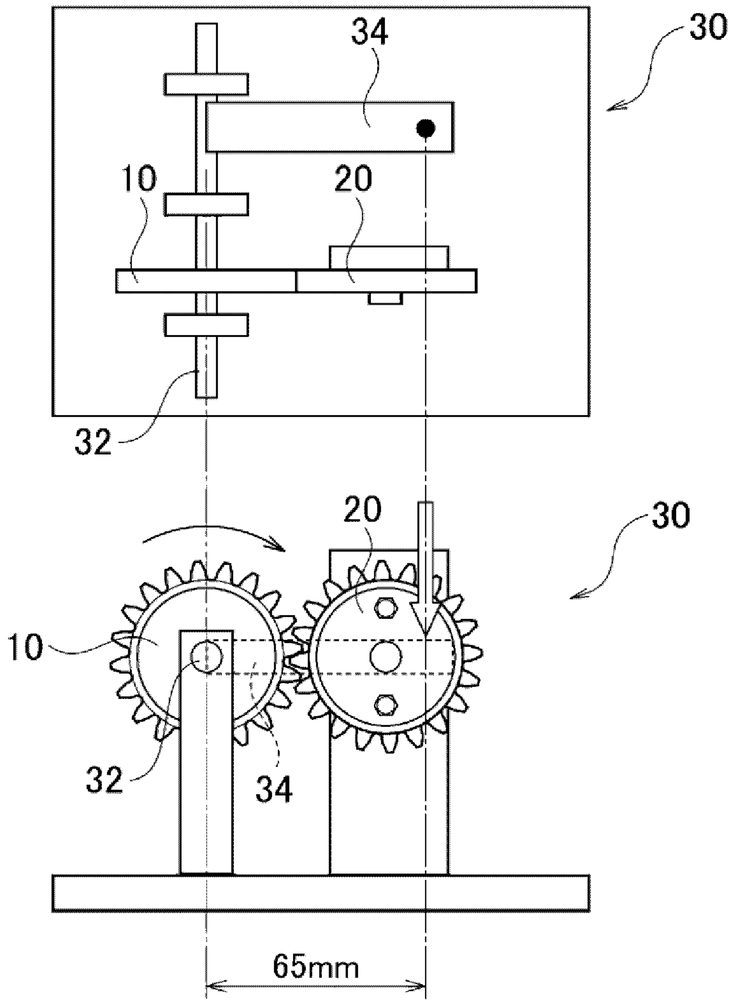


FIG. 8

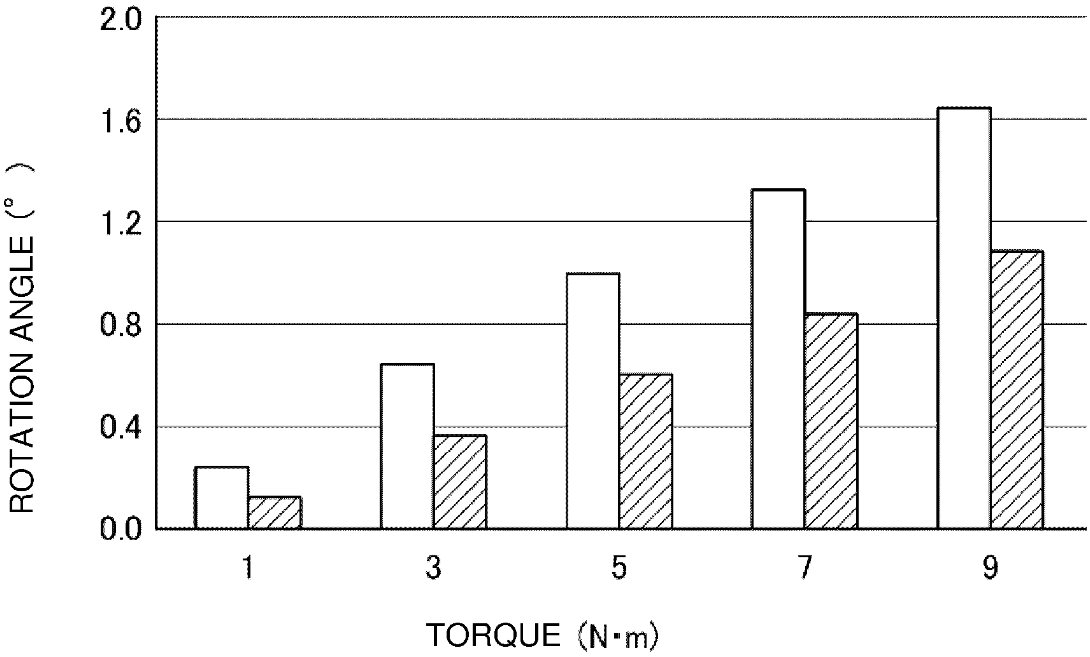

FIG. 9

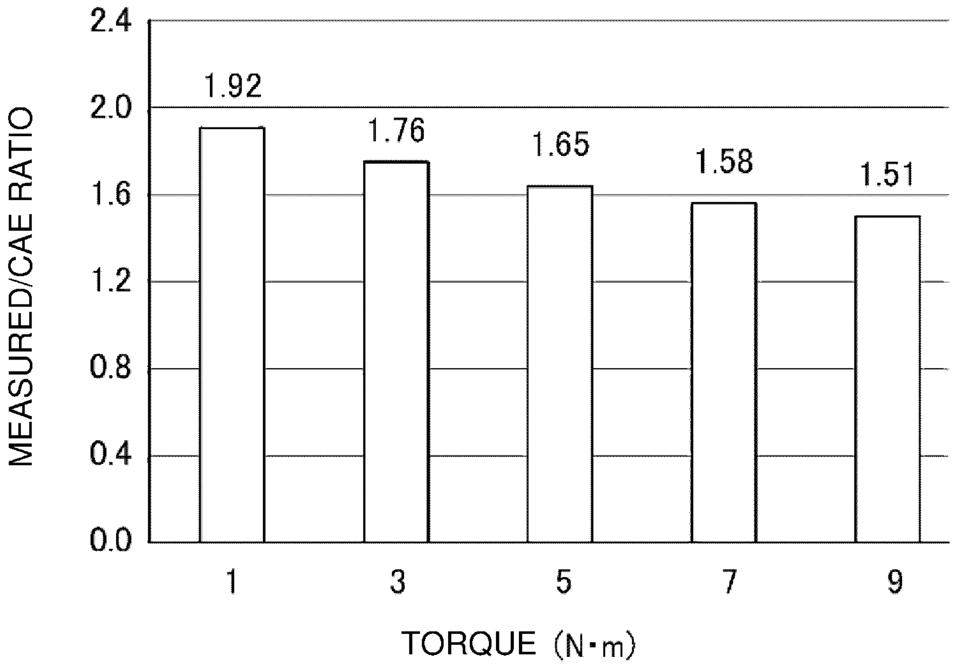
2.4
2.0
1.6
1.2
0.8
0.4
0.0
MEASURED/CAE RATIO
1.92
1.76
1.65
1.58
1.51
1
3
5
7
9
TORQUE (N・m)

FIG. 10

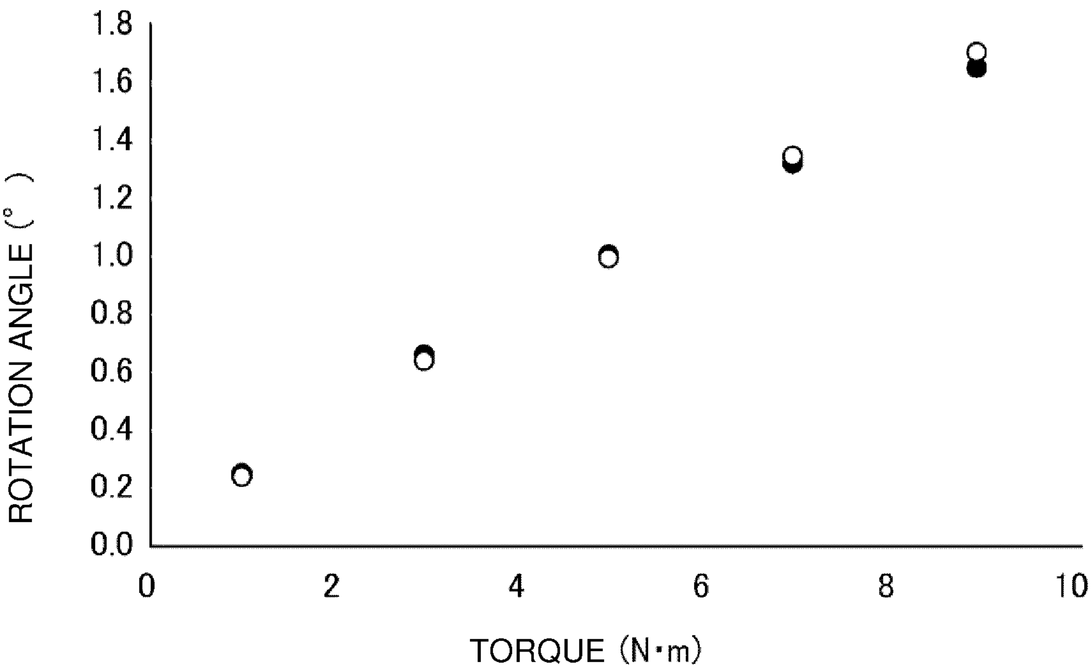
1.8
1.6
1.4
1.2
1.0
0.8
0.6
0.4
0.2
0.0
ROTATION ANGLE (° )
0
2
4
6
8
10
TORQUE (N・m)

FIG. 11

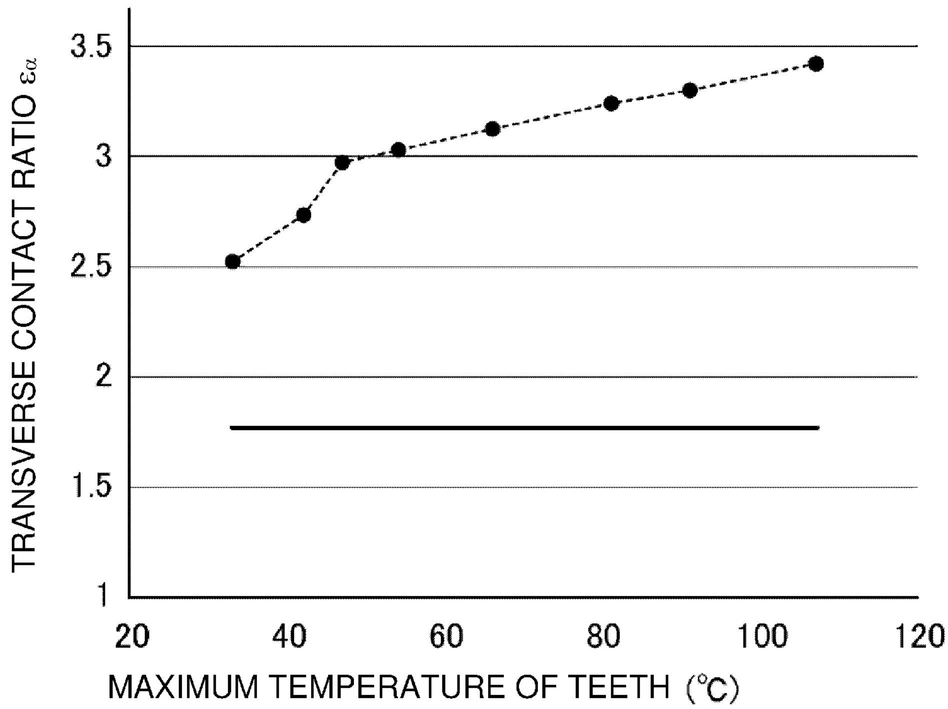
TRANSVERSE CONTACT RATIO εα
3.5
3
2.5
2
1.5
1
20
40
60
80
100
120
MAXIMUM TEMPERATURE OF TEETH (℃)

FIG. 12

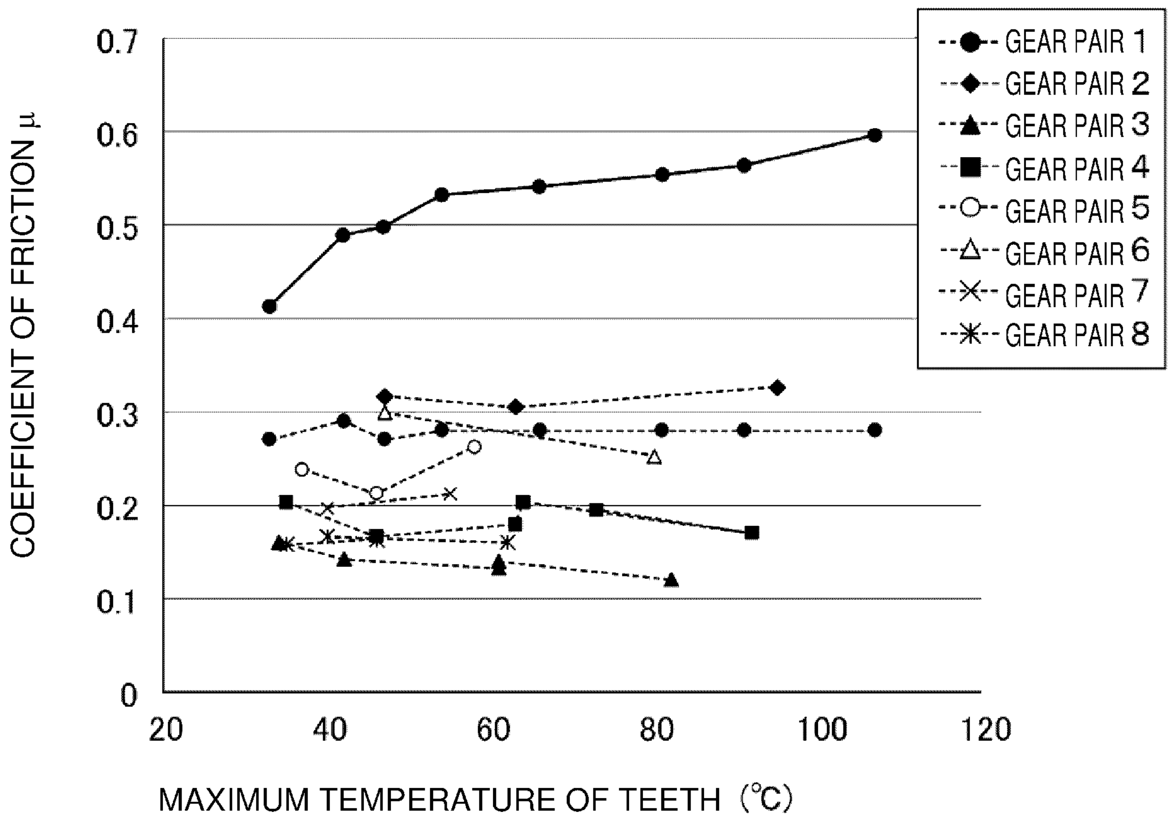
COEFFICIENT OF FRICTION μ
0.7
0.6
0.5
0.4
0.3
0.2
0.1
0
20
40
60
80
100
120
MAXIMUM TEMPERATURE OF TEETH (℃)
GEAR PAIR 1
GEAR PAIR 2
GEAR PAIR 3
GEAR PAIR 4
GEAR PAIR 5
GEAR PAIR 6
GEAR PAIR 7
GEAR PAIR 8

FIG. 13

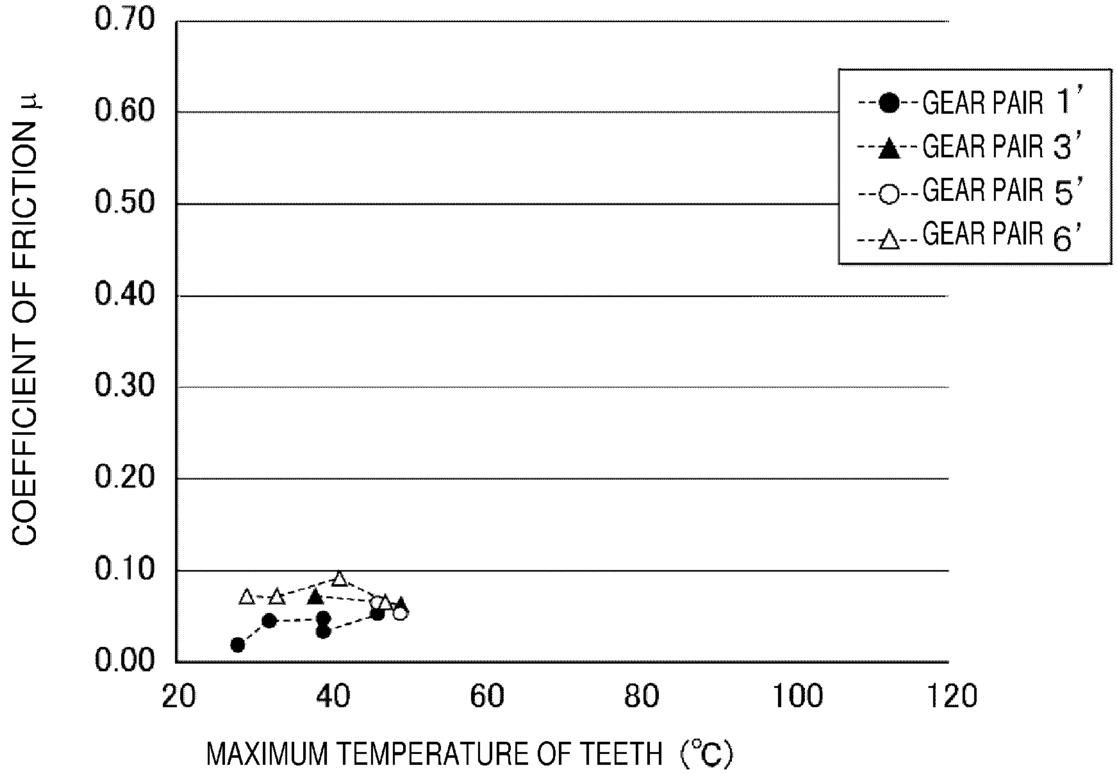
0.70
0.60
0.50
0.40
0.30
0.20
0.10
0.00
COEFFICIENT OF FRICTION μ
20
40
60
80
100
120
MAXIMUM TEMPERATURE OF TEETH (°C)
GEAR PAIR 1'
GEAR PAIR 3'
GEAR PAIR 5'
GEAR PAIR 6'

FIG. 14

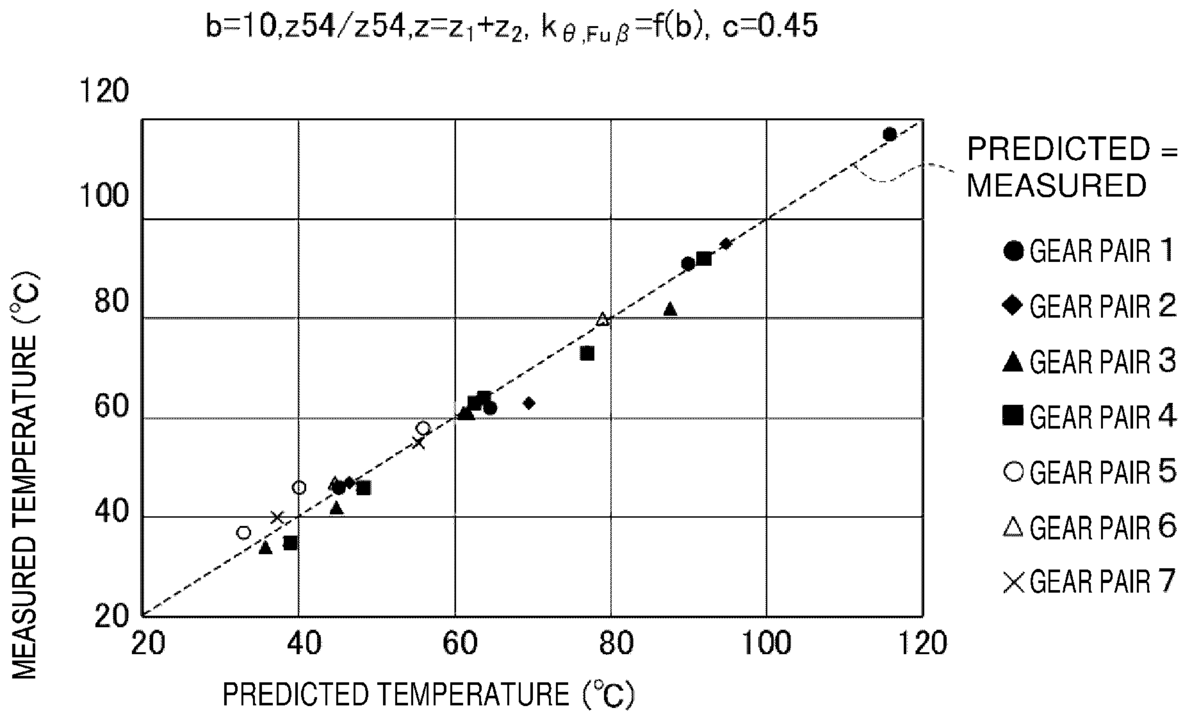
b=10,z54/z54,z=z1+z2, kθ,Fuβ=f(b), c=0.45
120
100
80
60
40
20
MEASURED TEMPERATURE (°C)
20
40
60
80
100
120
PREDICTED TEMPERATURE (°C)
PREDICTED = MEASURED
GEAR PAIR 1
GEAR PAIR 2
GEAR PAIR 3
GEAR PAIR 4
GEAR PAIR 5
GEAR PAIR 6
GEAR PAIR 7

# FIG. 15

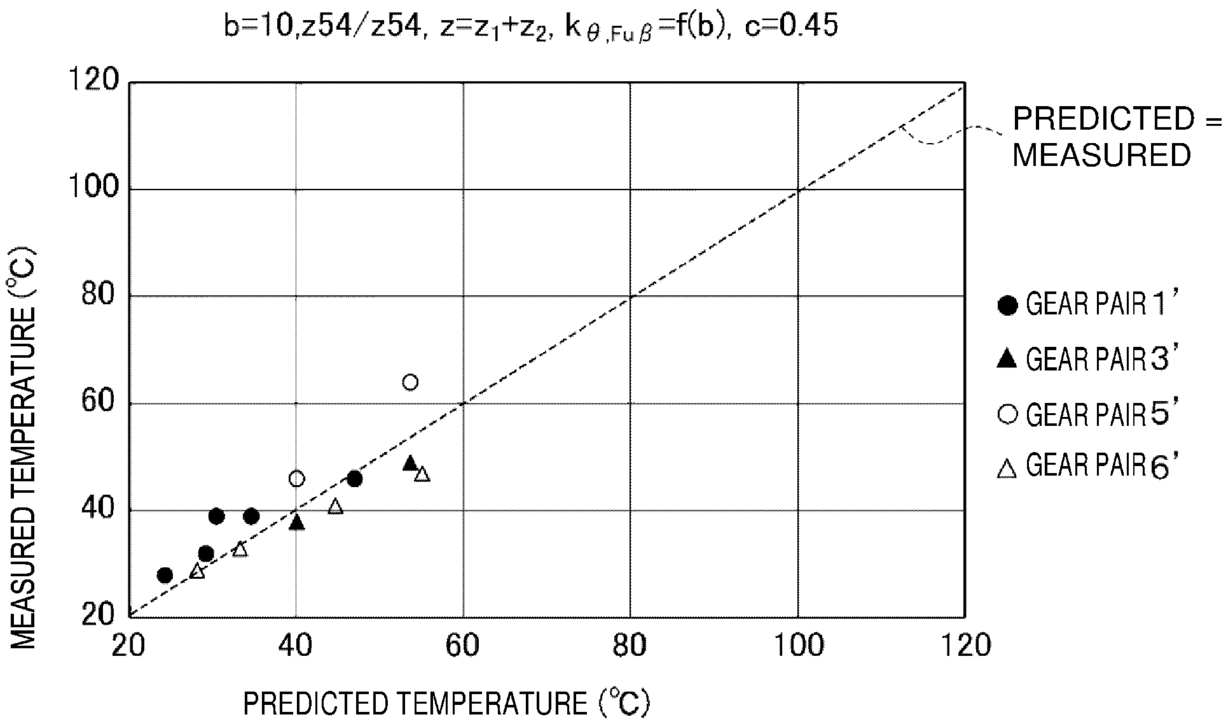
b=10,z54/z54, z=z1+z2, kθ,Fuβ=f(b), c=0.45
120
100
80
60
40
20
20
40
60
80
100
120
MEASURED TEMPERATURE (℃)
PREDICTED TEMPERATURE (℃)
PREDICTED = MEASURED
GEAR PAIR 1'
GEAR PAIR 3'
GEAR PAIR 5'
GEAR PAIR 6'

# FIG. 16

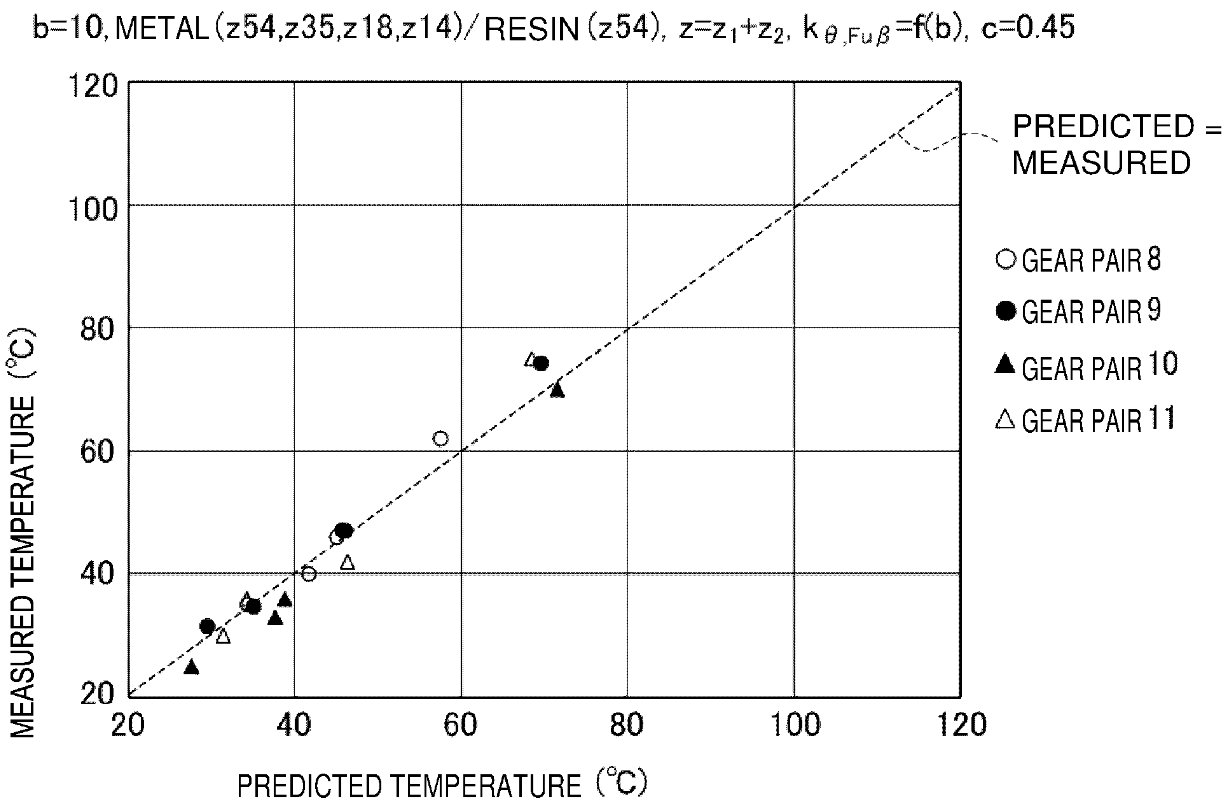
b=10, METAL (z54,z35,z18,z14)/RESIN (z54), z=z1+z2, kθ,Fuβ=f(b), c=0.45
120
100
80
60
40
20
20
40
60
80
100
120
MEASURED TEMPERATURE (℃)
PREDICTED TEMPERATURE (℃)
PREDICTED = MEASURED
GEAR PAIR 8
GEAR PAIR 9
GEAR PAIR 10
GEAR PAIR 11

FIG. 17

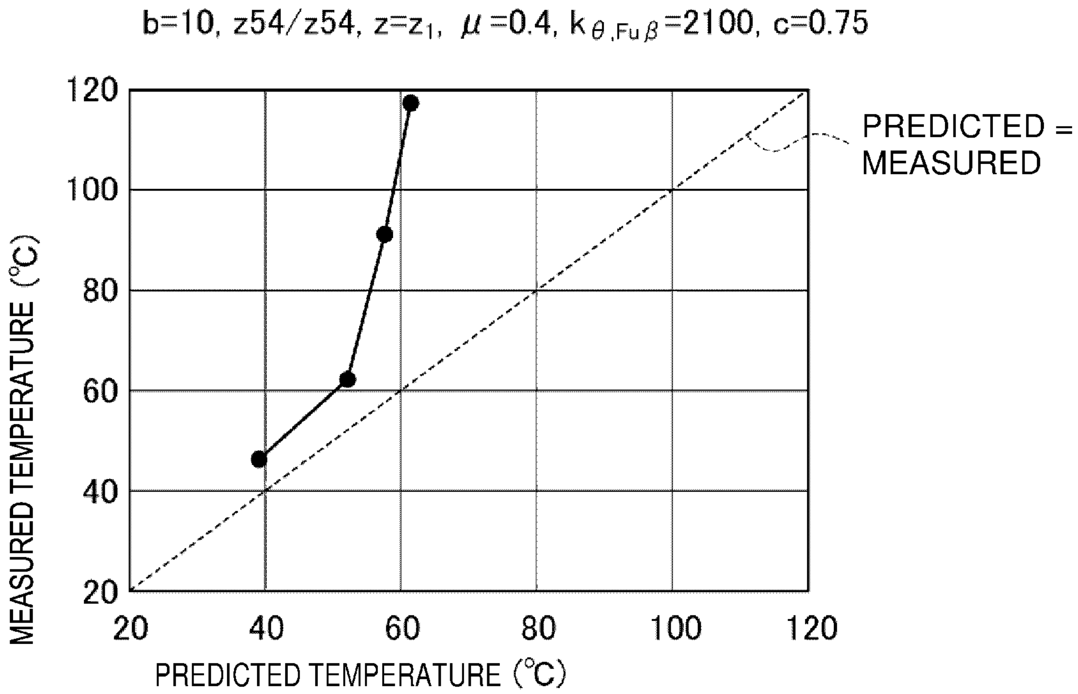
b=10, z54/z54, z=z1, μ=0.4, kθ,Fuβ=2100, c=0.75
120
100
80
60
40
20
20
40
60
80
100
120
MEASURED TEMPERATURE (℃)
PREDICTED TEMPERATURE (℃)
PREDICTED = MEASURED

FIG. 18

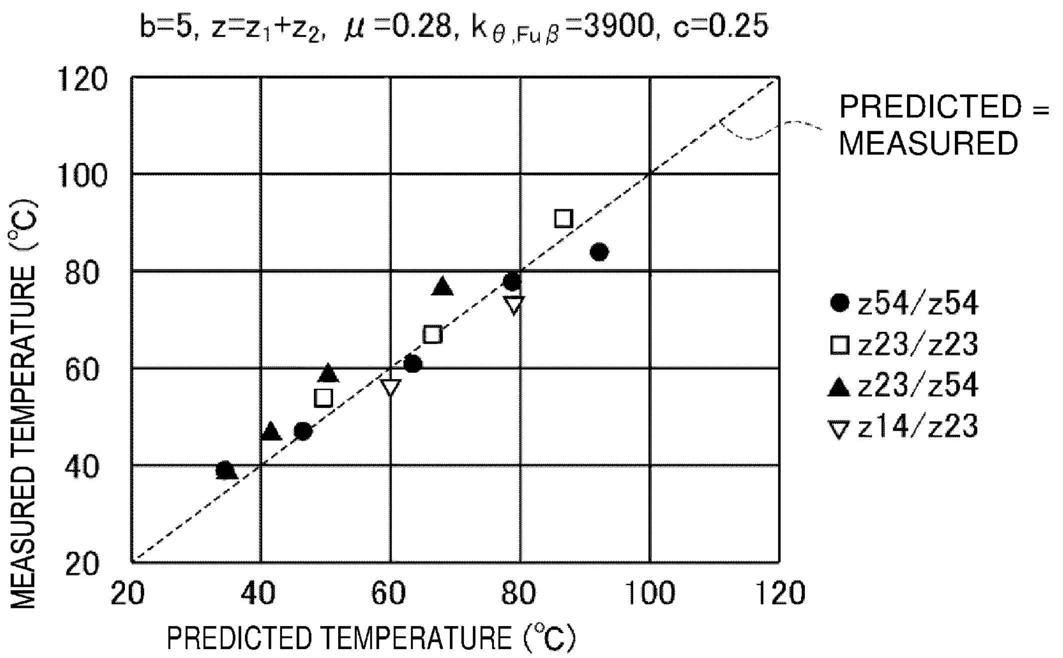
b=5, z=z1+z2, μ=0.28, kθ,Fuβ=3900, c=0.25
120
100
80
60
40
20
20
40
60
80
100
120
MEASURED TEMPERATURE (℃)
PREDICTED TEMPERATURE (℃)
PREDICTED = MEASURED
z54/z54
z23/z23
z23/z54
z14/z23

FIG. 19

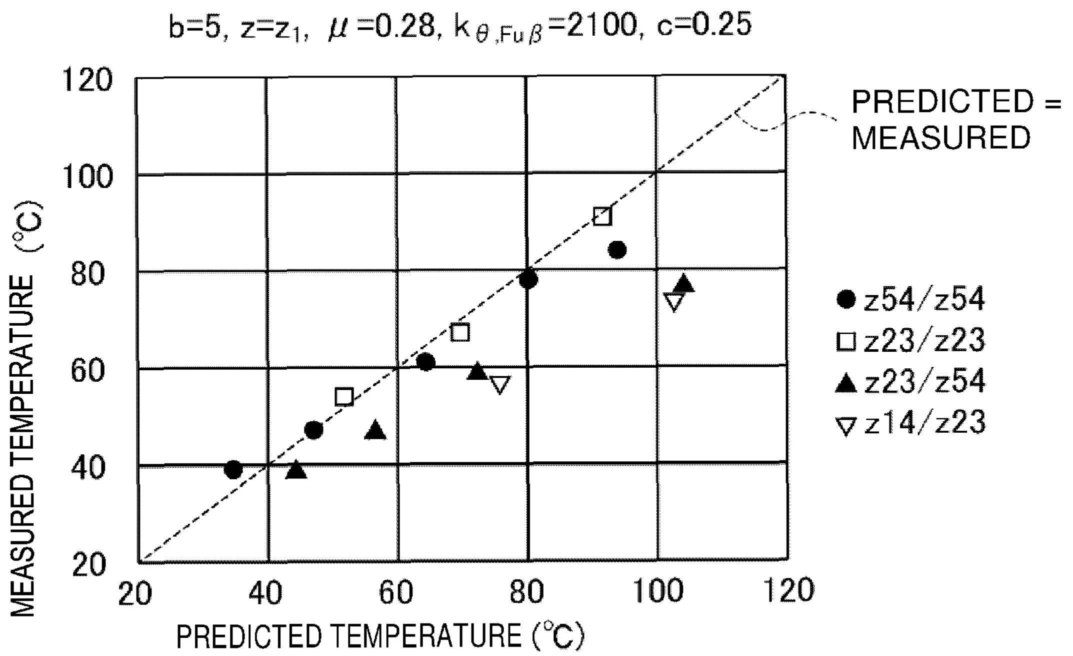
b=5, z=$z_1$, $\mu$=0.28, $k_{\theta,Fu\beta}$=2100, c=0.25
120
100
80
60
40
20
MEASURED TEMPERATURE (°C)
20
40
60
80
100
120
PREDICTED TEMPERATURE (°C)
PREDICTED = MEASURED
z54/z54
z23/z23
z23/z54
z14/z23

FIG. 20

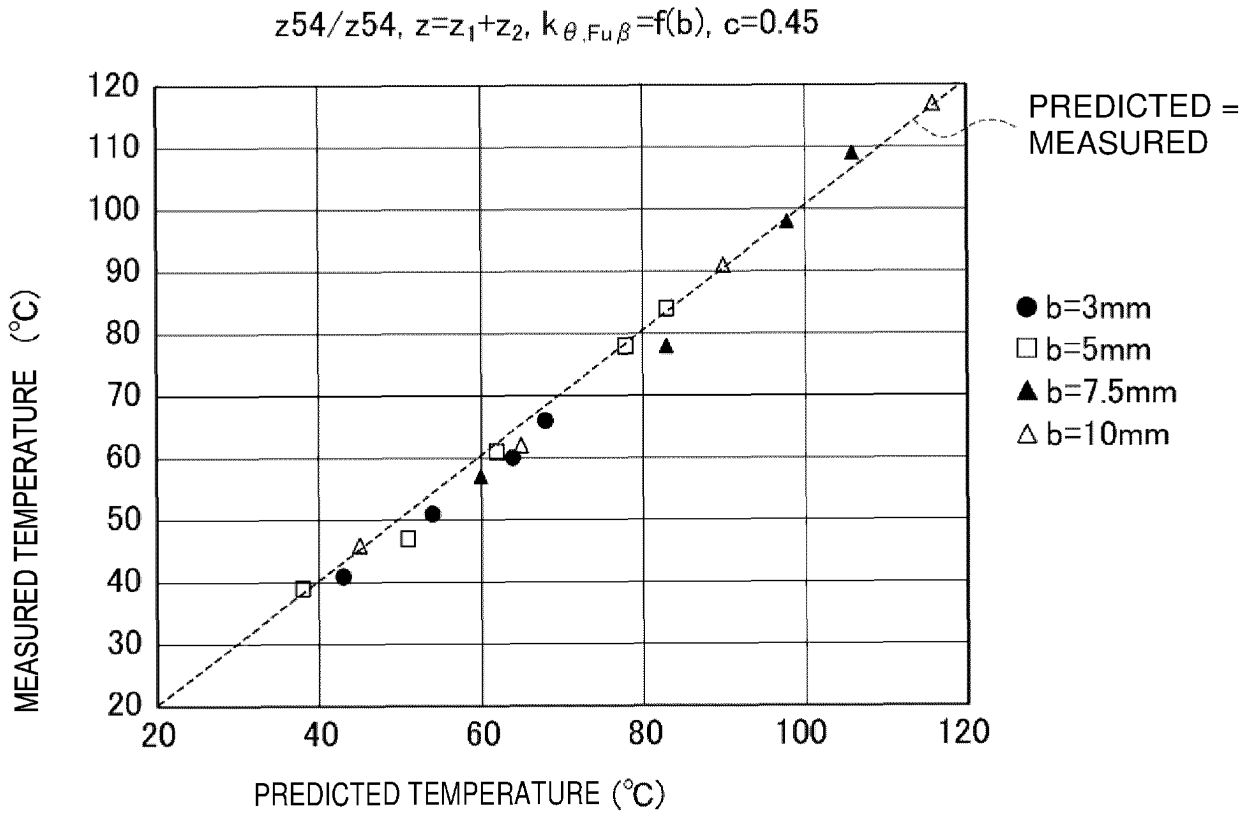
z54/z54, z=$z_1$+$z_2$, $k_{\theta,Fu\beta}$=f(b), c=0.45
120
110
100
90
80
70
60
50
40
30
20
MEASURED TEMPERATURE (°C)
20
40
60
80
100
120
PREDICTED TEMPERATURE (°C)
PREDICTED = MEASURED
b=3mm
b=5mm
b=7.5mm
b=10mm

FIG. 21

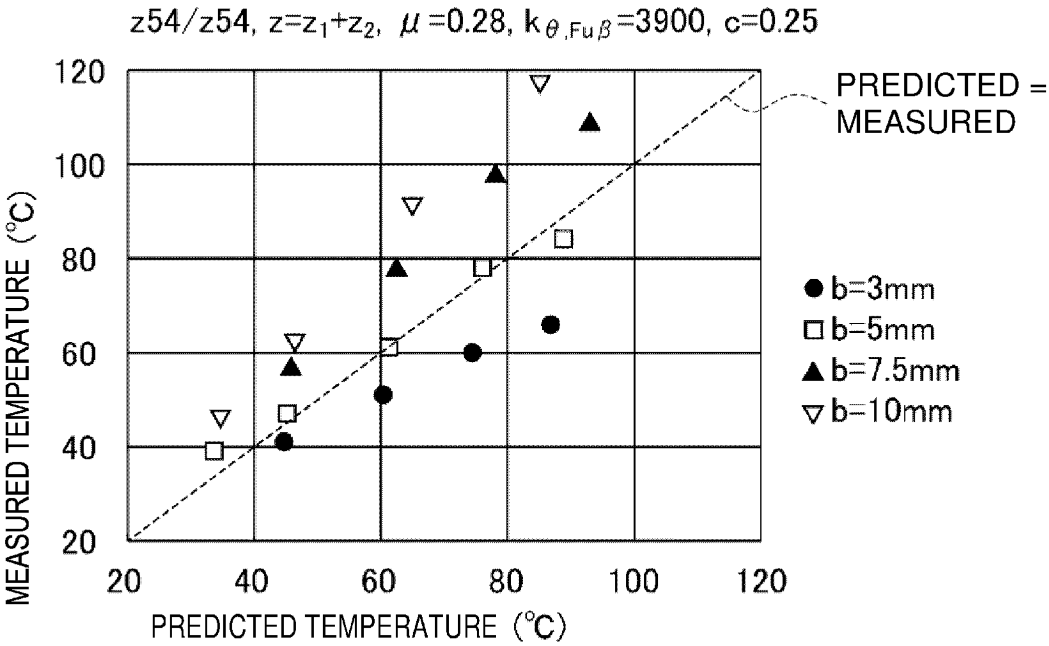
z54/z54, z=z1+z2, μ=0.28, kθ,Fuβ=3900, c=0.25
PREDICTED = MEASURED
MEASURED TEMPERATURE (°C)
PREDICTED TEMPERATURE (°C)
20
40
60
80
100
120
b=3mm
b=5mm
b=7.5mm
b=10mm

FIG. 22A

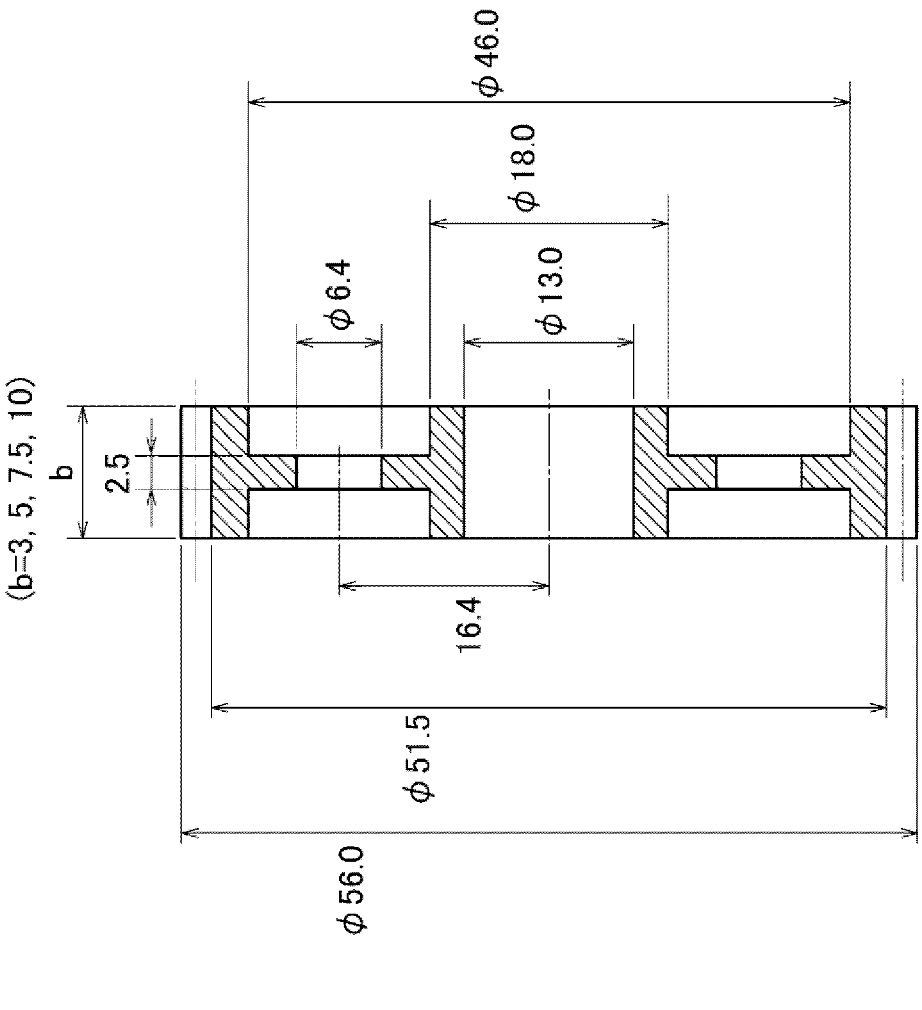


FIG. 22B

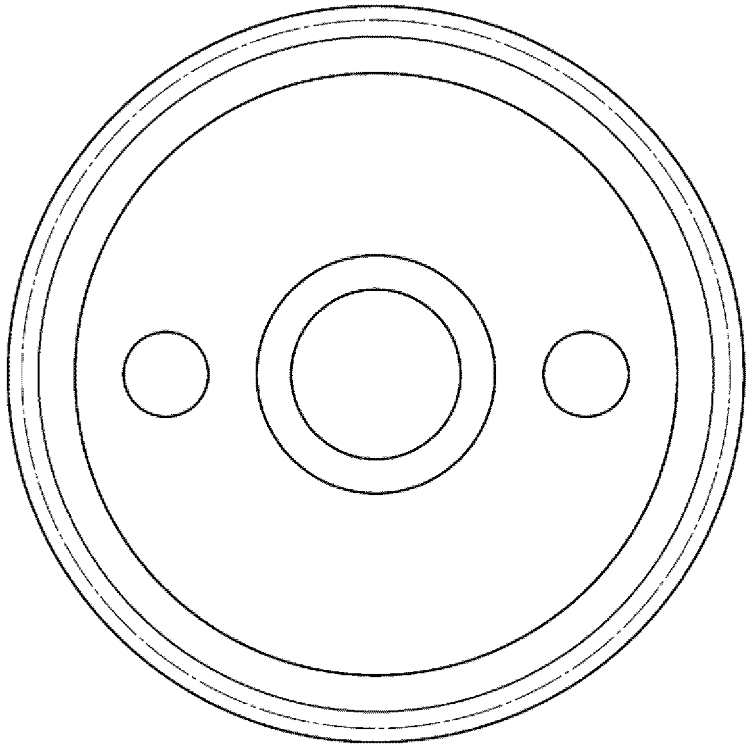

FIG. 23B

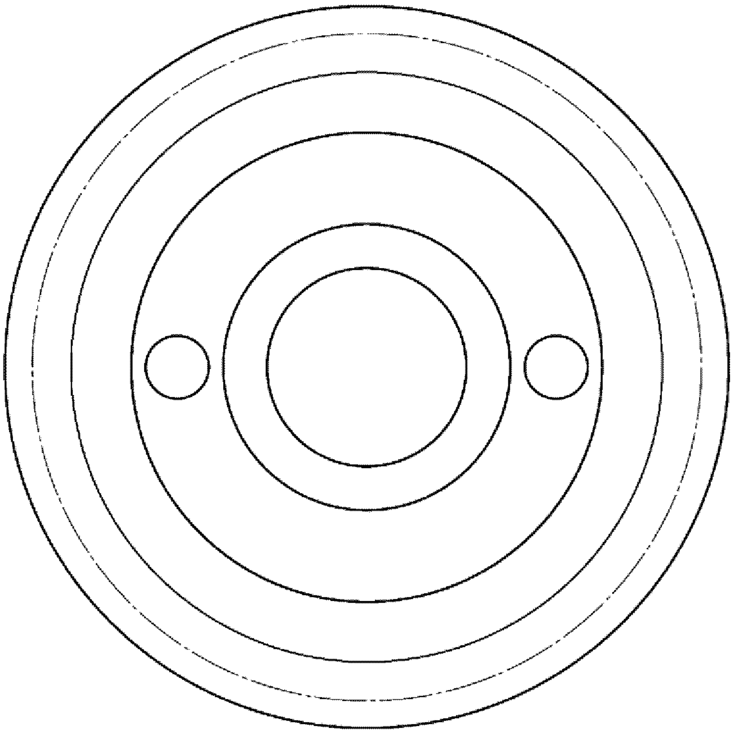

FIG. 23A

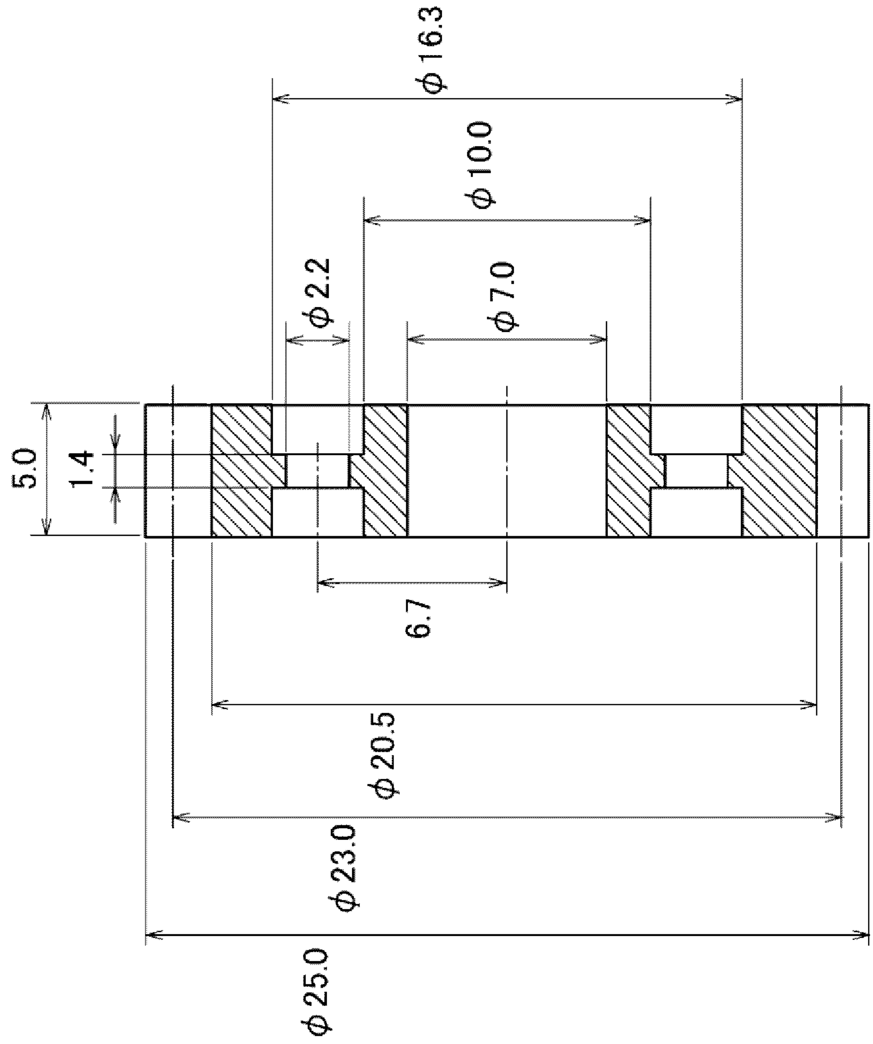

FIG. 24B

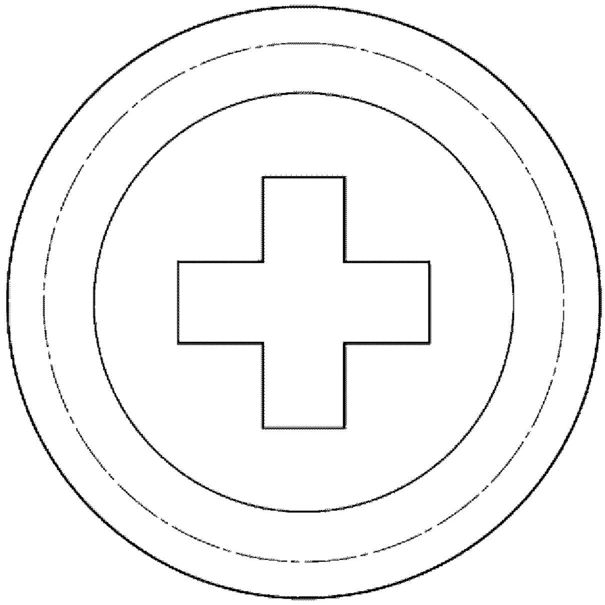

FIG. 24A

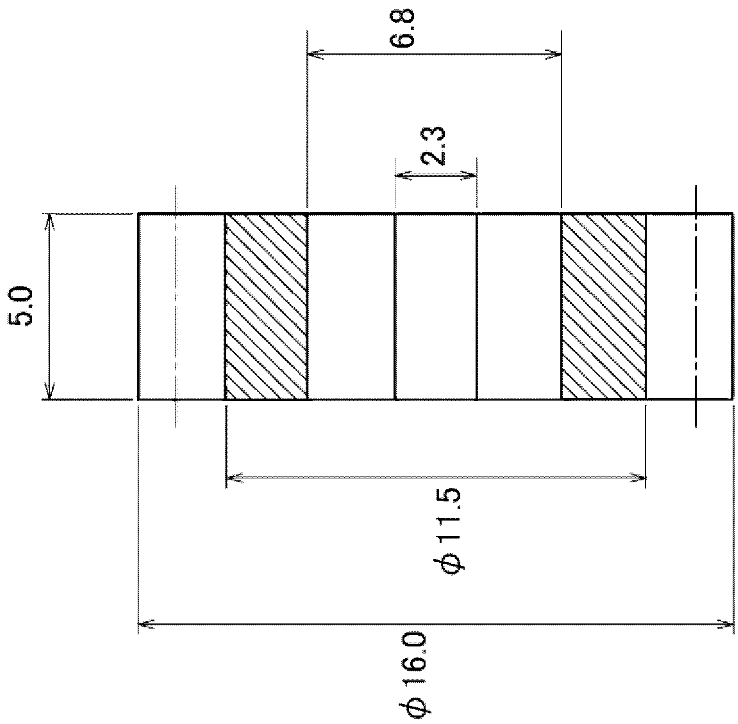

FIG. 25

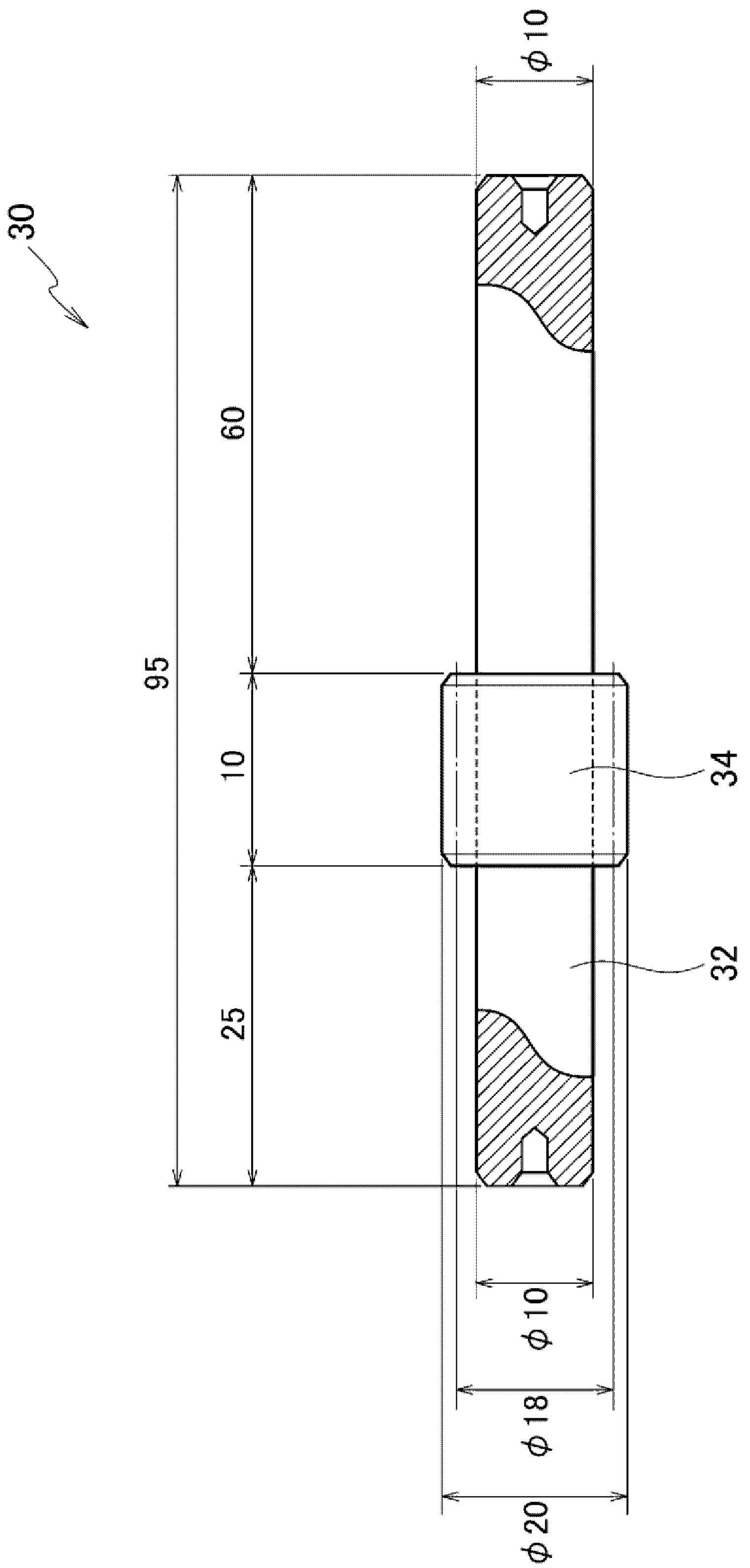

FIG. 26

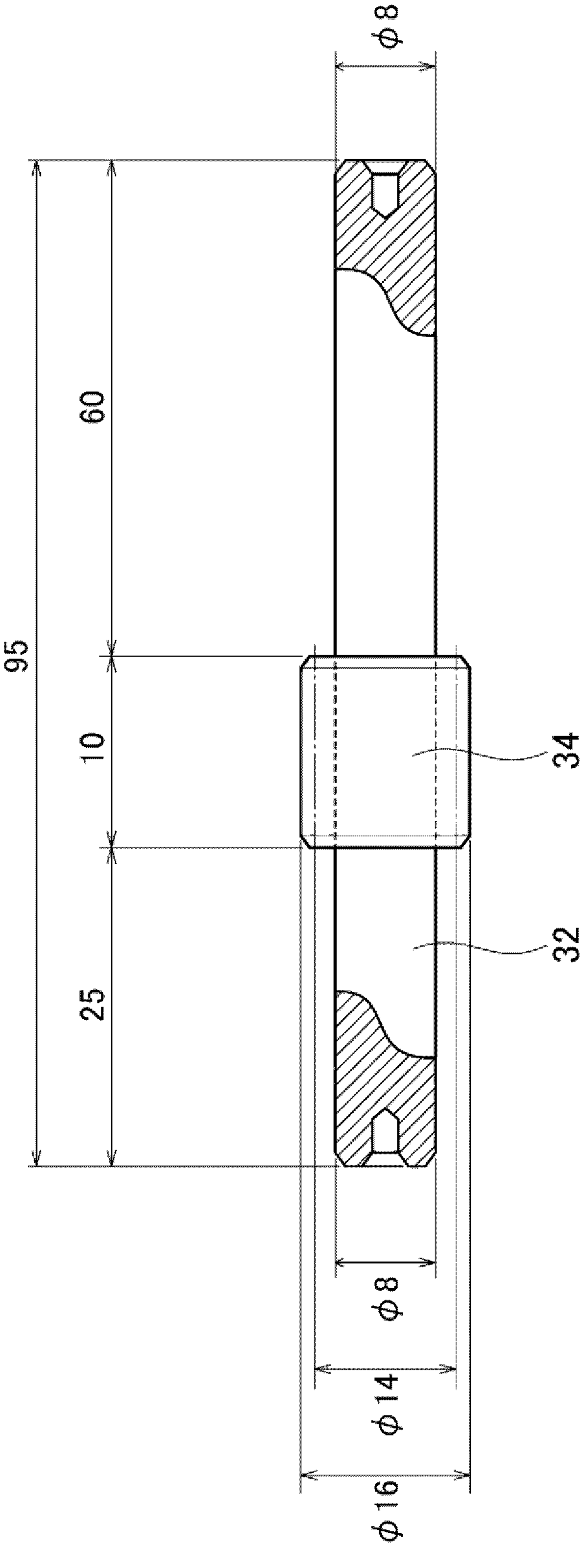

FIG. 27

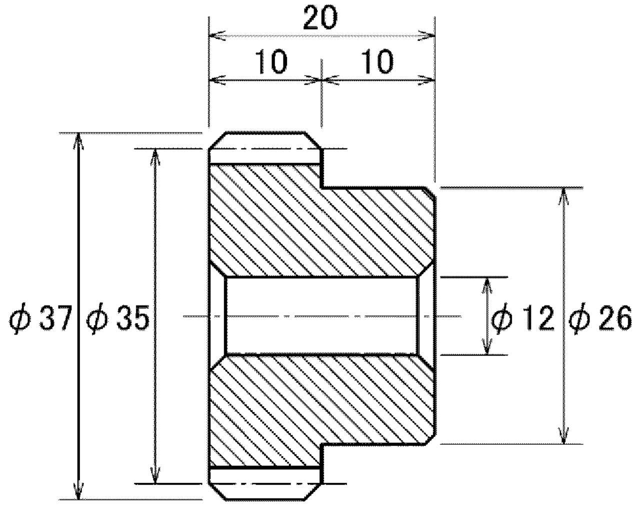


FIG. 28

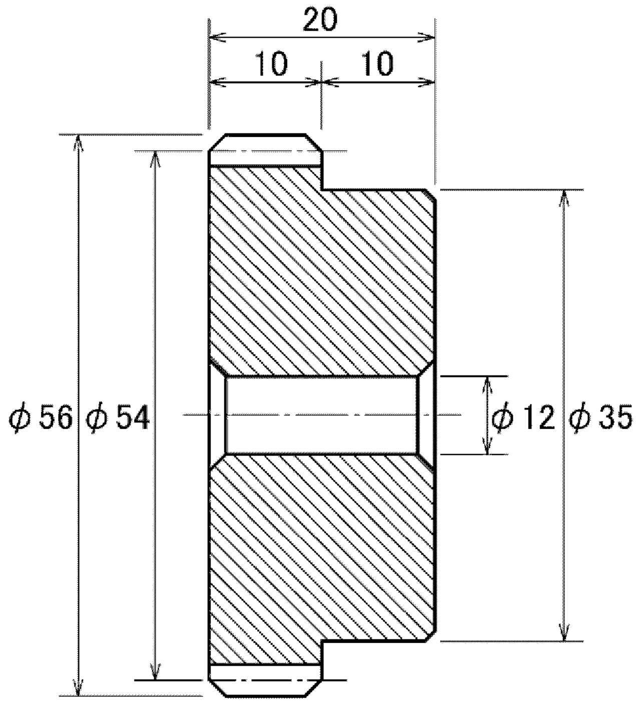

**INTERNATIONAL SEARCH REPORT**

International application No.
**PCT/JP2023/024256**

**A. CLASSIFICATION OF SUBJECT MATTER**

***G01M 13/021***(2019.01)i
FI: G01M13/021

According to International Patent Classification (IPC) or to both national classification and IPC

**B. FIELDS SEARCHED**

Minimum documentation searched (classification system followed by classification symbols)

G01M13/021

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-243590 A (RICOH CO., LTD.) 28 August 2002 (2002-08-28) paragraphs [0022]-[0044] | 1-9 |
| A | 高橋秀雄 他, 射出成形プラスチック平歯車の変形, 2001年度 精密工学会秋季大会学術講演会講演論文集, 2001, page 95, non-official translation (TAKAHASHI, Hideo et al. Deformation of injection molded plastic spur gears. 2001 The Japan Society for Precision Engineering Autumn Conference Academic Lecture Proceedings.) entire text, all drawings | 1-9 |
| A | 横山俊輔 他, 成形プラスチック歯車の歯の強度計算式に関する研究, 2000年度 精密工学会秋季大会学術講演会講演論文集, 2000, page 210, non-official translation (YOKOYAMA, Shunsuke et al. Research on the formula for calculating the strength of teeth of molded plastic gears. 2000 Japan Society for Precision Engineering Autumn Conference Academic Conference Proceedings.) entire text, all drawings | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/024256**

**C. DOCUMENTS CONSIDERED TO BE RELEVANT**

| Category* | Citation of document, with indication, where appropriate, of the relevant passages | Relevant to claim No. |
|---|---|---|
| A | Cerne, B. et al. Thermo-mechanical modeling of polymer spur gears with experimental validation using high-speed infra. Mechanism and Machine Theory. 2020, vol. 146, no. 4, pages 1-22, DOI.org/10.1016/j.mechmachtheory.2019.103734<br>entire text, all drawings | 1-9 |
| A | 上田昭夫 他, プラスチック歯車のかみ合い発熱のコンピュータシミュレーション, 日本機械学会論文集(C編), 2007, vol. 73, no. 732, pages 183-192, (UEDA, Akio et al. Computer Simulation on the Heat Generation in Meshing of Plastic Spur Gears (In Case of Plastic Spur Gears Pair). Transactions of the Japan society of mechanical engineers. C.)<br>entire text, all drawings | 1-9 |
| P, A | KR 10-2023-0029132 A (CHO, Jae Ho) 03 March 2023 (2023-03-03)<br>paragraphs [0020]-[0089] | 1-9 |

Form PCT/ISA/210 (second sheet) (January 2015)

**INTERNATIONAL SEARCH REPORT**
**Information on patent family members**

International application No.
**PCT/JP2023/024256**

| Patent document cited in search report | Publication date (day/month/year) | Patent family member(s) | Publication date (day/month/year) |
|---|---|---|---|
| JP 2002-243590 A | 28 August 2002 | (Family: none) | |
| KR 10-2023-0029132 A | 03 March 2023 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017062017 A